(19) Europäisches Patentamt
European Patent Office
Office européen des brevets

(11) **EP 3 303 471 B1**

(12) **EUROPÄISCHE PATENTSCHRIFT**

(45) Veröffentlichungstag und Bekanntmachung des Hinweises auf die Patenterteilung:
**03.07.2019  Patentblatt 2019/27**

(21) Anmeldenummer: **16740958.0**

(22) Anmeldetag: **25.05.2016**

(51) Int Cl.:
*C08L 31/04* (2006.01)      *C08L 21/00* (2006.01)
*C08J 3/24* (2006.01)       *C08L 75/12* (2006.01)
*C08L 77/00* (2006.01)      *C08K 3/011* (2018.01)

(86) Internationale Anmeldenummer:
**PCT/DE2016/100242**

(87) Internationale Veröffentlichungsnummer:
**WO 2016/188517 (01.12.2016 Gazette 2016/48)**

(54) **HÄRTEEINSTELLUNG VON THERMOPLASTISCHEN ELASTOMERZUSAMMENSETZUNGEN DURCH KOMBINATION VON THERMOPLASTEN UND THERMOPLASTISCHEN ELASTOMEREN**

HARDNESS ADJUSTMENT OF THERMOPLASTIC ELASTOMER COMPOSITIONS BY COMBINATION OF THERMOPLASTICS AND THERMOPLASTIC ELASTOMERS

RÉGLAGE DE LA DURETÉ DE COMPOSITIONS D'ÉLASTOMÈRE THERMOPLASTIQUE PAR COMBINAISON DE THERMOPLASTES ET D'ÉLASTOMÈRES THERMOPLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2015  DE 102015007200**

(43) Veröffentlichungstag der Anmeldung:
**11.04.2018  Patentblatt 2018/15**

(73) Patentinhaber: **Kraiburg TPE GmbH & Co. KG 84478 Waldkraiburg (DE)**

(72) Erfinder: **VIELSACK, Frieder 84478 Waldkraiburg (DE)**

(74) Vertreter: **Eder Schieschke & Partner mbB Patentanwälte Elisabethstraße 34 80796 München (DE)**

(56) Entgegenhaltungen:
**EP-A1- 2 345 695      DE-A1-102011 053 224
US-A1- 2005 107 550    US-A1- 2009 255 707**

## Beschreibung

Die vorliegende Erfindung betrifft thermoplastische Elastomerzusammensetzungen, deren Härte mittels ausgewählter Kombinationen von Thermoplasten und thermoplastischen Elastomeren (TPE) eingestellt werden kann. Die erfindungsgemäßen thermoplastischen Elastomerzusammensetzungen zeichnen sich durch sehr hohe Temperatur- und chemische Beständigkeit bei gleichzeitig sehr guten mechanischen Kenngrößen in einem sehr weiten Shore-A-Härtebereich von 10 bis 100 ShA aus. Weiterhin betrifft die vorliegende Erfindung auch ein Verfahren zur Herstellung von thermoplastischen Elastomerzusammensetzungen sowie ein Verfahren zur Einstellung der Härte bei thermoplastischen Elastomerzusammensetzungen.

Mechanische Kenngrößen von thermoplastischen Elastomerzusammensetzungen sind beispielsweise Zugfestigkeit, Bruchdehnung, Druckverformungsrest (engl. compression set, CS) und Quellverhalten. Die zur Herstellung von thermoplastischen Elastomerzusammensetzungen verwendete Polymerklasse der TPE kombiniert die gummielastischen Eigenschaften von Elastomeren mit den vorteilhaften Verarbeitungseigenschaften von Thermoplasten. Diese Kombination von Eigenschaften eröffnet den TPE-Materialien eine Vielzahl von Anwendungen wie beispielsweise im Automobilinnenbereich und - außenbereich, für Industriegeräte, Industriewerkzeuge, Haushaltsgeräte, medizinische Verbrauchsartikel und Geräte, Hygieneartikel wie Zahnbürsten, Sportartikel, Badarmaturen, Spielwaren, Behälter für Nahrungsmittel, um nur einige zu nennen. Dabei übernehmen die TPE-Materialien Eigenschaften wie Dichtungs- und Dämpfungsfunktion oder werden aus Gründen ihrer angenehmen Haptik und Optik eingesetzt.

Dem Fachmann sind verschiedene Klassen thermoplastischer Elastomere bekannt. Die hierin beschriebenen TPE folgen den Definitionen der DIN EN ISO 18064. Ferner werden die TPE Klassen auch in "G. Holden, H. R. Kricheldorf, R. P. Quirk (Eds.), Thermoplastic Elastomers, Carl Hanser Verlag, 3rd Ed., Munich (2004)" oder auch unter "http://en.wikipedia.org/wiki/Thermoplastic-elastomer" beschrieben.

Wie in der DIN EN ISO 18064 unter 3.1. beschrieben, unterscheidet man TPE in zwei Hauptklassen. Dabei kann ein TPE aus einem Polymer oder einer Polymermischung (Blend) bestehen. Weiterhin sind nach der genannten DIN EN ISO 18064 TPE bei Gebrauchstemperatur in ihren Eigenschaften denen von vulkanisiertem Kautschuk ähnlich, können jedoch bei erhöhten Temperaturen wie ein thermoplastischer Kunststoff verarbeitet und aufbereitet werden.

TPE, die nur aus einem Polymer bestehen, sind fast ausschließlich Blockcopolymere (beispielsweise TPE auf Polyamid-Basis (TPA), TPE auf Copolyester-Basis (TPC), TPE auf Polystyrol-Basis (TPS), TPE auf Polyurethan-Basis (TPU)). Polymermischungen bestehen in der Regel aus einem Elastomer und einem Thermoplasten (beispielsweise TPO (TPE auf Polyolefinbasis)). Ferner sind dem Fachmann zahlreiche Mischformen beider Klassen bekannt. Die DIN EN ISO 18064 kategorisiert diese unter TPZ. Abweichend von dieser Norm, wird in der vorliegenden Schrift nicht von der Bezeichnung TPZ Gebrauch gemacht. So liegen im Handel befindliche TPS häufig nicht als reine Blockcopolymere vor, sondern häufiger als Blends von Styrolblockcopolymeren und Thermoplasten. Dennoch werden sie (hierin) abweichend von der Norm als TPS bezeichnet. Ferner gibt es innerhalb der Klasse der TPV (TPE auf Basis von vulkanisiertem (vernetztem) Kautschuk) vulkanisierte Mischungen aus Thermoplasten und Kautschuken (oder Elastomeren), die als statistische und/oder alternierende Copolymere vorliegen und solche, bei denen die Kautschuke aus Blockcopolymeren aufgebaut sind. Bei TPV basierend auf Blockcopolmeren wird häufiger der Begriff TPV anstelle von TPZ verwendet. In diesen Fällen wird in der vorliegenden Schrift abweichend von der DIN EN ISO 18064 die Bezeichnung TPV gewählt.

TPE basierend auf Blockcopolymeren (zum Beispiel TPA, TPC, TPS) bilden auf Grund ihres inneren molekularen Aufbaus Phasen (auch Domänen). Polymermischungen können ebenfalls Phasen (auch Domänen) bilden und somit TPE-Verhalten zeigen. In beiden Fällen bilden sich harte, thermoplastische und weiche, elastomere Domänen aus. Bei Wärmeeinwirkung schmelzen die thermoplastischen Bereiche auf, das TPE lässt sich dann wie ein Thermoplast verarbeiten. Bei Abkühlung erstarren diese harten Bereiche erneut, das Material zeigt dann elastische Eigenschaften der weichen Domänen.

Im Vergleich zu unvernetzten TPE zeigen TPV einer bestimmten Polymerklasse in der Regel verbesserte mechanische Eigenschaften wie beispielsweise Zugfestigkeit, Bruchdehnung oder Druckverformungsrest auf. Insbesondere können durch Vernetzung die chemische Beständigkeit und somit das Quellverhalten von TPE deutlich verbessert werden. Allerdings geht der Zugewinn an Eigenschaften mit einem höheren Aufwand bei der Herstellung einher. So müssen zusätzlich Vernetzungsmittel wie Peroxide, Schwefelverbindungen oder Phenolharze eingesetzt werden. Es muss darauf geachtet werden, dass die harte, thermoplastische Phase nicht mitvernetzt oder abgebaut wird. Abbau kann zum Beispiel bei schlechter Prozessführung und Verwendung von Peroxiden in Gegenwart von PP (Polypropylen) als Thermoplast auftreten. Bei der TPV-Herstellung müssen generell Vorkehrungen zur Vermeidung von eventuellen, schlagartigen exothermen Reaktionen bei der Vulkanisation getroffen werden.

Seit der Entdeckung in den 1960iger Jahren hat sich innerhalb der Klasse der TPV die Methode der dynamischen Vulkanisation durchgesetzt. Hierbei wird während der innigen Vermischung der geschmolzenen thermoplastischen und elastomeren Phasen in Gegenwart von entsprechenden Chemikalien vernetzt. In den letzten Jahrzehnten wurde eine Vielzahl von Elastomer/Thermoplast Kombinationen mit unterschiedlichsten Vernetzersystemen zur TPV-Herstellung eingesetzt (siehe auch "G. Holden, H. R. Kricheldorf, R. P. Quirk (Eds.), Thermoplastic Elastomers, Carl Hanser Verlag, 3rd Ed., Munich (2004), S. 161 ff.").

Neben der klassischen dynamischen Vulkanisation, wobei ein oder mehrere Thermoplaste mit einem oder mehreren Elastomeren kombiniert werden, wurden weitere Methoden der Herstellung von TPV entwickelt. So beschreibt die DE 10 2008 012 516 A1 eine Methode bei der als Elastomer ein α-Olefin-Vinylacetat-Copolymer zusammen mit einem peroxidischen Vernetzer anstelle mit einem Thermoplasten mit einem TPE zu einem TPV umgesetzt wird. Als TPE kommen Copolyester (TPC) zum Einsatz. Auch die DE 692 27 140 T2 beschreibt thermoplastische Elastomerzusammensetzungen, die neben einem Kautschuk als zweite Komponente ein thermoplastisches Polyester-Elastomer und nicht einen Thermoplasten enthalten. Die DE 692 27 140 T2 beschreibt das altbekannte Problem, dass bei einem zu hohen Anteil an thermoplastischen Polyester-Elastomer die Flexibilität und die Zusammendrückbarkeit nicht ausreichend gut sind. Ist der Anteil an thermoplastischen Polyester-Elastomer jedoch zu niedrig, so weist die resultierende Zusammensetzung eine schlechte Verarbeitbarkeit und eine zu geringe Fluidität auf. Eine schlechte Verarbeitbarkeit bringt in der Regel ein schlechtes Standzeitverhalten mit sich, die das Verarbeitungsfenster verringert.

Ein TPV wird nach der DIN EN ISO 18064 als "*thermoplastisches Kautschukvulkanisat, das aus einer Mischung eines thermoplastischen Werkstoffs mit einem gewöhnlichem Kautschuk besteht, bei dem der Kautschuk durch den dynamischen Vulkanisationsprozess während des Verschneide- und Mischvorgangs vernetzt wurde*" bezeichnet. Neben der dynamischen Vulkanisation können vernetzte Elastomerpartikel auch durch einen separaten Schritt erzeugt werden und hinterher in einem Thermoplast dispergiert werden. Diese Art von TPV folgt nicht der Definition der genannten ISO-Norm, gehört jedoch zum näheren Stand der Technik. Die DE 44 25 944 A1 beschreibt beispielsweise Mischungen von Thermoplasten aus der Reihe Polycarbonat, Polystyrolacrylnitril, Polymethylmethacrylat, Polyoxymethylen und andere mit vernetzten Ethylen-Vinylester-Mischpolymerisaten. Ferner sei in diesem Zusammenhang darauf hingewiesen, dass die Grenzen zu sogenannten schlagzähmodifizierten Thermoplasten fließend sind. Hier werden für die Modifikation der Thermoplaste eher geringe Mengen von vernetzten Elastomeren in thermoplastische Matrices eingearbeitet.

Unter dynamischer Vulkanisation versteht man die Vernetzung eines Elastomers während dem Prozess des Aufschmelzens und Mischens in Gegenwart eines Thermoplasten und ggf. anderer Zusätze.

Eine weitere Möglichkeit TPE-Materialien herzustellen, die vernetzte Elastomerdomänen aufweisen, ist die Mischung von vorvernetzten Elastomerpartikeln mit thermoplastischen Elastomeren (TPE). Unter "vorvernetzten" Elastomeren werden solche verstanden, die vor der Verarbeitung zu den thermoplastischen Elastomeren bereits vernetzt vorliegen. Als Beispiel seien die Produkte Chemigum® (NBR-Elastomer) und Sunigum® (vernetztes Acrylat-Terpolymer) der Fa. Omnova genannt, die als Modifizierer für TPC oder TPU angeboten werden.

Je nach Anwendung werden unterschiedliche Eigenschaftsprofile für TPE-Materialien gefordert. In der Regel wird nicht nur eine Eigenschaft, sondern eine Kombination mehrerer Eigenschaften auf hohem Niveau gefordert. Beispielsweise für Motor- oder Getriebedichtungen im Automobilbereich werden niedriger Druckverformungsrest bei hohen Temperaturen und gleichzeitig guter Beständigkeit gegen Mineralöle sowie Haftung auf zum Beispiel Polyamid gefordert. Die Schwierigkeiten, die sich dabei einem Entwickler stellen, sind gegenläufige Effekte, die ein gleichzeitiges Erreichen eines sehr hohen Eigenschaftsniveaus aller geforderten Eigenschaften kaum oder gar nicht möglich machen.

Dem Fachmann ist es geläufig, dass beispielsweise unvernetzte TPE, wie beispielsweise TPS aus Styrolblockcopolymeren und Polypropylen (PP) gute Haftung auf PP zeigen und sich auch sehr gute Zugfestigkeiten und Bruchdehnungseigenschaften einstellen lassen. Jedoch sind diese TPE-Materialien lediglich bis zu Dauereinsatztemperaturen bis ca. 80°C geeignet. Ist beispielsweise eine Haftung auf polaren Oberflächen wie Polyamid gefordert, muss der Fachmann beispielsweise polare Modifikationen am Elastomer oder am Thermoplast vornehmen (siehe beispielsweise US 8,193,273).

Durch Einsatz von vulkanisierten TPV können häufig die Temperaturbeständigkeit und auch das Quellverhalten verbessert werden (EP 2 098 566 A1 und EP 2 098 570 B1), jedoch geht dies häufig mit Einbußen hinsichtlich der Verarbeitbarkeit und elastischer Eigenschaften einher.

Dem Fachmann ist ferner bekannt, dass die Wahl der eingesetzten Rohstoffe vor allem die chemische Beständigkeit, Einsatztemperatur und Haftung gegenüber anderen Werkstoffen maßgeblich beeinflusst. Hierbei muss klar zwischen den unterschiedlichen Typen von TPE unterschieden werden. Bei reinen Blockcopolymeren wie TPC, TPU, TPA und TPS können die Monomerbausteine variiert werden. Bei den Polymermischungen wie den TPS, TPO oder TPV können sowohl die Monomerbausteine der Thermoplaste und Elastomere variiert werden, als auch die Kombination entsprechender Thermoplaste und Elastomere selbst. Hier sei auf "G. Holden, H. R. Kricheldorf, R. P. Quirk (Eds.), Thermoplastic Elastomers, Carl Hanser Verlag, 3rd Ed., Munich (2004)" verwiesen. Limitiert in der Kombinationsmöglichkeit wird der Fachmann häufig durch inkompatible Rohstoffkombinationen v.a. bei den TPE, die aus Polymerblends bestehen.

Um eine Anwendung bzw. ein Anwendungsfeld erfolgreich bedienen zu können, wird von einem TPE-Hersteller erwartet, dass er nicht ein TPE-Compound mit nur einer bestimmten Härte anbieten kann, sondern vielmehr eine ganze Reihe von Compounds unterschiedlicher Härtegrade. Es wird ferner erwartet, dass innerhalb dieser Reihe möglichst alle Compounds ein gleich gutes, hohes Eigenschaftsniveau aufweisen. Mit dieser Forderung des Marktes, kommt neben den oben erwähnten gegenläufigen Effekten, die die Materialeigenschaften beeinflussen, der weitere erschwerende Aspekt der Herstellung solcher TPE hinzu.

Liegt ein Anforderungsprofil vor, trifft der Fachmann in der Regel zunächst eine Rohstoffauswahl bzw. wählt die geeignete TPE-Klasse, die die geforderten Eigenschaften am ehesten erfüllen könnte. Häufig haben Produktionsparameter, wie das (die) zur Verfügung stehende(n) Produktionsaggregat(e), die Verarbeitbarkeit der Komponenten und des entstehenden Produkts sowie etwaige Obergrenzen der Produktionskosten einen stark eingrenzenden Einfluss auf die Rohstoffwahl. Nach erfolgter Auswahl optimiert der Fachmann zunächst die Rohstoffanteile so, dass sich ein möglichst optimales, für die Erfüllung des Anforderungsprofils erforderliches Eigenschaftsprofil ergibt. Nach dieser Optimierung erfolgt anschließend die Erstellung einer Reihe von TPE-Compounds mit unterschiedlichen Härten zur Verifizierung.

Wählt der Fachmann aus der TPE-Klasse ein TPV (hierzu sollen in dieser Schrift auch bereits genannte Mischungen von vernetzten Elastomeren und Thermoplasten oder TPE zählen), so gelten die gleichen Schritte. Üblicherweise wird bei TPE, die als Polymerblend vorliegen (hierzu zählen auch TPV) die Härte über die Menge des enthaltenen Thermoplasten bzw. generell der thermoplastischen Phase und/oder die Menge an zugesetztem Prozessöl (auch Weichmacher) eingestellt. Die Erhöhung der thermoplastischen Phase kann auch über die Zugabe von TPE (beispielsweise TPC, TPU, TPA) erfolgen.

Allerdings geht die Härte-Anpassung der zuvor optimierten Rezeptur im Allgemeinen mit einer Verschlechterung anderer geforderter Eigenschaften einher. So muss beispielsweise zur Erzielung einer höheren Härte mehr Thermoplast zugegeben bzw. generell mehr thermoplastische Phase erzeugt werden. Dies geht aber regelmäßig mit der Verschlechterung der elastischen Eigenschaften wie z.B. Druckverformungsrest, Bruchdehnung und Elastizität einher. Eine niedrigere Härte kann beispielsweise durch Zugabe von Weichmachern bzw. Ölen erfolgen. Allerdings weisen Elastomere eine begrenzte Aufnahmefähigkeit für Öle auf und beginnen bei der Zugabe von zu viel Öl auszuölen. Hierunter leiden dann häufig die mechanischen Eigenschaften und die chemische Beständigkeit. So verschlechtern sich die mechanischen Eigenschaften bei Kontakt mit unpolaren Medien wie mineralischen Ölen, Fetten oder Kraftstoffen.

TPC, TPA und TPU sind TPE, die aus Blockcopolymeren aufgebaut sind. Sie zeigen hohe Temperaturbeständigkeit und/oder gute chemische Beständigkeit. Allerdings stehen diese TPE-Klassen hauptsächlich für Anwendungen im Shore-D-Härtebereich. Des Weiteren zeigen sie nur moderate elastische Eigenschaften auf und sind im Vergleich zu TPS, TPO oder TPV signifikant teurer. Das Spektrum der einstellbaren Härten bei diesen TPE aus Blockcopolymeren ist jedoch bis dato, ähnlich wie bei den oben beschriebenen TPE aus Polymerblends, limitiert. Hohe Härten im Shore-A-Härtebereich können ohne deutliche Einbußen der wesentlichen elastischen Charakteristika nicht erzielt werden, da mit steigendem Anteil an Thermoplast-Phase und damit verbundenem sinkenden Anteil an Elastomer die thermoplastischen Eigenschaften immer stärker zu tragen kommen.

Um ein möglichst breites Spektrum an unterschiedlichen Härten bei TPE bereitstellen zu können, muß nach einer Möglichkeit gesucht werden, diese gezielt steuern zu können, ohne dabei die wesentlichen Produkteigenschaften, wie z.B. Druckverformungsrest und Elastizität dieser Materialien zu stören. Auch ist es erforderlich, dass das Standzeitverhalten der resultierenden Zusammensetzungen ausreichend ist, um keine Probleme bei der Verarbeitung zu bekommen.

Aufgabe der vorliegenden Erfindung ist es deshalb, TPE-Zusammensetzungen bereitzustellen, die möglichst gleichbleibend sehr gute Rückstelleigenschaften, einen guten Zugverformungsrest, einen guten Druckverformungsrest, sehr gute Temperaturbeständigkeit und chemische Beständigkeit in einem breiten Härtebereich von 10 bis 100 ShA (Shore-A-Härte) aufweisen. Ferner besteht die Aufgabe darin, nicht nur einzelne TPE-Zusammensetzungen, sondern ganze Reihen von TPE-Zusammensetzungen herstellen zu können, die in der Härte variieren, aber ansonsten gleichbleibend hohe Eigenschaftsniveaus haben. Die TPE sollen zudem durch übliche Verarbeitungstechniken wie Extrusion, Spritzguss oder Blasformen verarbeitet werden können, d.h. das Verarbeitungsfenster, der Zeitraum, in dem die Zusammensetzungen verarbeitet werden können, muss ausreichend groß sein.

Die genannte Aufgabe wird durch eine erfindungsgemäße thermoplastische Elastomerzusammensetzung gelöst, die eine thermoplastische Phase (T) und eine elastomere Phase (EL) aufweist, wobei T mindestens einen Thermoplasten (TP) aus der Klasse der Polyester, Polyamide oder Polyurethane und mindestens ein TPE aus der Klasse TPC (TPE auf Copolyester-Basis), TPA (TPE auf Polyamid-Basis) oder TPU (TPE auf Polyurethan-Basis) umfasst, wobei EL mindestens ein vernetztes oder unvernetztes Elastomer umfasst, und wobei das Gewichtsverhältnis EL:T im Bereich von 100:25 bis 100:80, stärker bevorzugt im Bereich von 100:35 bis 100:70 und am stärksten bevorzugt im Bereich von 100:40 bis 100:60 liegt.

Das EL:T-Gewichtsverhältnis im angegebenen Bereich stellt einen optimalen Kompromiss für die mechanischen Eigenschaften, Temperaturbeständigkeit, chemische Beständigkeit und Verarbeitungsverhalten dar.

Eine weitere alternative Ausführungsform betrifft eine erfindungsgemäße thermoplastische Elastomerzusammensetzung wie vorstehend beschrieben, bei der der mindestens eine Thermoplast (TP) ein Polyolefin und das mindestens eine TPE ein TPO (TPE auf Polyolefin-Basis) ist. Allerdings ist es erfindungsgemäß bevorzugt, dass das TP und das TPE aus den weiter oben genannten Klassen ausgewählt wird.

In einer weiteren Ausführungsform der erfindungsgemäßen thermoplastischen Elastomerzusammensetzung ist es aus Gründen der besseren Kompatibilität bevorzugt, wenn in der thermoplastischen Phase (T) Polyester mit TPC bzw. Polyamide mit TPA oder TPU kombiniert werden.

In einer weiteren Ausführungsform umfasst die erfindungsgemäße thermoplastische Elastomerzusammensetzung ein Vernetzungsmittel, vorzugsweise zur Vernetzung der elastomeren Phase (EL). Mögliche Vernetzungsmittel sind - je nach Verwendung des Elastomers - solche, die weiter unten genannt sind. In anderen Worten soll die vorliegende Erfindung also auch vernetzte (vulkanisierte) thermoplastische Elastomerzusammensetzungen (TPV-Compounds) umfassen, bei denen das mindestens eine Elastomer der elastomeren Phase vernetzt vorliegt. Zur Vernetzung des Elastomers kann zusätzlich zu dem Vernetzungsmittel ein Covernetzer eingesetzt werden. Bevorzugte Covernetzer sind ebenso weiter unten genannt.

Das Gewichtsverhältnis TP zu TPE liegt in der erfindungsgemäßen thermoplastischen Elastomerzusammensetzung vorzugsweise im Bereich von TP:TPE 5:95 bis 95:5, stärker bevorzugt im Bereich von 10:90 bis 80:20 und am stärksten bevorzugt im Bereich von 15:85 bis 60:40.

Wird als thermoplastisches Elastomer in der thermoplastischen Phase (T) TPC verwendet, so weist dieses vorzugsweise eine Shore-D-Härte im Bereich von 36 ShD bis 60 ShD auf. Wird als thermoplastisches Elastomer in der thermoplastischen Phase (T) TPA oder TPU verwendet, so weist dieses vorzugsweise eine Shore-A-Härte im Bereich von 60 ShA bis 90 ShA auf. Die Shore-Härte ist ein Werkstoffkennwert eines Elastomers oder Kunststoffs, dessen Bestimmung in den Normen DIN EN ISO 868 und DIN ISO 7619-1 festgelegtist.

Die erfindungsgemäße thermoplastische Elastomerzusammensetzung kann auch einen Weichmacher, einen Stabilisator, einen Hilfsstoff, einen Farbstoff, einen Füllstoff und/oder einen Verträglichkeitsvermittler enthalten. Diese sind ebenso weiter unten genauer beschrieben. Hierbei wird der Weichmacher vorzugsweise in einem Gewichtsverhältnis EL zu Weichmacher (phr) im Bereich von 100:10 bis 100:50, stärker bevorzugt in einem Bereich von 100:20 bis 100:40 und am stärksten bevorzugt im Bereich von 100:25 bis 100:35 eingesetzt. Das Vernetzungsmittel wird vorzugsweise in einem Gewichtsverhältnis EL zu Vernetzungsmittel im Bereich von 100:25 bis 100:5, stärker bevorzugt im Bereich von 100:20 bis 100:10 und am stärksten bevorzugt im Bereich größer oder gleich 100:13 bis 100:18 eingesetzt. Der Covernetzer wird vorzugsweise in einem Gewichtsverhältnis EL zu Covernetzer im Bereich von 100:1 bis 100:10 und stärker bevorzugt im Bereich von 100:2 bis 100:8 eingesetzt. Stabilisatoren, Hilfsstoffe und Farbstoffe werden vorzugsweise in einem Gewichtsverhältnis EL zu den genannten eingesetzten Stoffen in einem Bereich von 100:5 bis 100:20 und stärker bevorzugt in einem Bereich von 100:8 bis 100:15 eingesetzt. Ein Füllstoff wird vorzugsweise in einem Gewichtsverhältnis EL zu Füllstoff in einem Bereich von 100:1 bis 100:10 und stärker bevorzugt in einem Bereich von 100:2 bis 100:8 eingesetzt.

Wird erfindungsgemäß ein Verträglichkeitsvermittler eingesetzt, so ist dieser vorzugsweise ein Elastomer wie weiter unten beschrieben. In diesem Fall ist der Verträglichkeitsvermittler als Bestandteil der elastomeren Phase (EL) anzusehen und bei sämtlichen angegebenen Gewichtsverhältnissen entsprechend mit zu berücksichtigen. Das Gewichtsverhältnis des mindestens einen Elastomers zu dem elastomeren Verträglichkeitsvermittler in der Phase EL liegt vorzugsweise im Bereich von 99:1 bis 80:20, stärker bevorzugt im Bereich von 95:5 bis 85:15 und am stärksten bevorzugt im Bereich von 92:8 bis 88:12.

Ferner besteht die Lösung der Aufgabe der vorliegenden Erfindung darin, thermoplastische Elastomerzusammensetzungen bereitstellen zu können, die ein möglichst breites Spektrum an unterschiedlichen Shore-Härten abdecken. Überraschenderweise wurde herausgefunden, dass, wenn das Gewichtsverhältnis EL:T konstant gehalten, aber das Gewichtsverhältnis TP:TPE variiert wird, die Shore-Härten der erfindungsgemäßen thermoplastischen Elastomerzusammensetzungen in einem weiten Bereich variiert werden können, ohne dass dabei Eigenschaften, wie Druckverformungsrest, Zugfestigkeit und Bruchdehnung maßgeblich darunter leiden. Auf diese Weise können thermoplastische Elastomerzusammensetzungen mit Shore-A-Härten im Bereich von 10 bis 100 ShA, bevorzugt 40 bis 90 ShA verwirklicht werden.

Somit erfolgt die Einstellung der Shore-Härte einer erfindungsgemäßen thermoplastischen Elastomerzusammensetzung über das Gewichtsverhältnis von TP zu TPE. Dabei wird eine höhere Shore-Härte durch eine größere Menge an Thermoplast erreicht. Niedrigere Shore-Härten werden entsprechend durch eine größere Menge an TPE erreicht. Wenig Thermoplast im Verhältnis zu viel TPE bedeutet eine geringere Härte. Es wurde überraschend gefunden, dass das TPE wie ein polymerer Weichmacher in der thermoplastischen Phase (T) wirkt.

Die vorliegende Erfindung betrifft somit auch ein Verfahren zum Verändern/Einstellen der Shore-Härte von thermoplastischen Elastomerzusammensetzungen (vorzugsweise erfindungsgemäßen thermoplastischen Elastomerzusammensetzungen), ohne dabei wesentliche Verschlechterungen bei dem Druckverformungsrest und/oder der Bruchdehnung und/oder der Zugfestigkeit zu erhalten, wobei die thermoplastischen Elastomerzusammensetzungen eine thermoplastische Phase (T) und eine elastomere Phase (EL) aufweisen, wobei T einen Thermoplasten (TP) und ein thermoplastisches Elastomer (TPE) umfasst, wobei bei der Herstellung der thermoplastischen Elastomerzusammensetzungen im Vergleich zu einer Referenzzusammensetzung mit vorgegebener Shore-Härte das Gewichtsverhältnis EL:T gleich gehalten, aber das Gewichtsverhältnis TP:TPE variiert wird, wobei der Druckverformungsrest der thermoplastischen Elastomerzusammensetzungen, gemessen nach 24 Stunden bei 120°C, um nicht mehr als 10%-Punkte höher liegt, und/oder die Bruchdehnung und/oder die Zugfestigkeit der thermoplastischen Elastomerzusammensetzungen um nicht mehr als 10% niedriger liegt, jeweils im Vergleich zur Referenzzusammensetzung.

Ein weiterer Vorteil des erfindungsgemäßen Verfahrens ist, dass die Verarbeitbarkeit des erhaltenen Materials bei der Variation des Gewichtsverhältnisses TP:TPE bei relativ konstant gehaltenem Gewichtsverhältnis EL:T sich im Wesentlichen nicht verändert.

In einer weiteren Ausführungsform des erfindungsgemäßen Verfahrens ist es bevorzugt, dass bei der Herstellung der thermoplastischen Elastomerzusammensetzungen im Vergleich zu der Referenzzusammensetzung das Gewichtsverhältnis TP:TPE so variiert wird, dass die Menge an TP oder TPE um mindestens 1 Gew.-%, bevorzugt mindestens 3 Gew.%, ganz besonders bevorzugt 5 Gew.% erhöht und die Menge des jeweils anderen um den gleichen Gewichtsprozentsatz erniedrigt wird.

In einer noch weiteren Ausführungsform des erfindungsgemäßen Verfahrens ist es bevorzugt, dass die thermoplastische Phase der Referenzzusammensetzung keinen Thermoplasten enthält.

Die Optimierung der Eigenschaften einer thermoplastischen Elastomerzusammensetzung, wie Druckverformungsrest, Bruchdehnung oder Zugfestigkeit, erfolgt also vorzugsweise in einem ersten Schritt. Dieser erste Schritt umfasst die Wahl der eingesetzten TPE, Thermoplaste, Elastomere und evtl. des Vernetzungssystems wie auch die entsprechenden Mengenverhältnisse. Dabei erhält man eine Zusammensetzung, die im Sinne des erfindungsgemäßen Verfahrens als Referenzzusammensetzung dient, bevor die Härteeinstellung in den dazu veränderten Zusammensetzungen stattfindet. Sobald die richtigen Rohstoffe und das richtige EL:T-Gewichtsverhältnis für einen optimalen Druckverformungsrest, eine optimale Bruchdehnung und/oder optimale Zugfestigkeit gefunden sind, wird die Shore-Härte der Zusammensetzung während einem zweiten Schritt durch Veränderung des Gewichtsverhältnisses von TP:TPE variiert. In anderen Worten handelt es sich bei dem erfindungsgemäßen Verfahren zur Veränderung/Einstellung der Shore-Härte einer thermoplastischen Zusammensetzung um ein Screening-Verfahren. Auf diese Weise können die Eigenschaften von erfindungsgemäßen thermoplastischen Elastomeren eingestellt bzw. auf gewünschte Weise verändert werden. Das erfindungsgemäße Verfahren liefert neben einer Referenzzusammensetzung weitere Zusammensetzungen mit geänderter Shore-Härte. Somit kann den Erfordernissen einer Anwendung bzw. einem Anwendungsfeld optimal Rechnung getragen werden. Anstelle nur einer optimierten Elastomerenzusammensetzung kann eine Reihe mit unterschiedlichen Härtegraden jedoch gleich gutem, hohem Eigenschaftsniveau am Markt angeboten werden.

Es ist weiterhin bevorzugt, dass der Druckverformungsrest der thermoplastischen Elastomerzusammensetzungen, gemessen nach 24 Stunden bei 120°C, um nicht mehr als 5% höher, und/oder die Bruchdehnung und/oder die Zugfestigkeit der thermoplastischen Elastomerzusammensetzungen um nicht mehr als 5% niedriger liegt, und stärker bevorzugt mindestens gleich groß sind, jeweils im Vergleich zur Referenzzusammensetzung. Ganz besonders bevorzugt ist der Druckverformungsrest kleiner als bei der Referenzzusammensetzung. Weiterhin bevorzugt ist die Bruchdehnung und/oder die Zugfestigkeit größer als bei der Referenzzusammensetzung.

Bei dem erfindungsgemäßen Verfahren ist es bevorzugt, dass das Gewichtsverhältnis EL:T im Bereich von 100:25 bis 100:80, stärker bevorzugt im Bereich von 100:35 bis 100:70 und am stärksten bevorzugt im Bereich von 100:40 bis 100:60 liegt.

Weiterhin ist es bevorzugt, dass das Verhältnis TP:TPE 5:95 bis 95:5, stärker bevorzugt im Bereich von 10:90 bis 80:20 und am stärksten bevorzugt im Bereich von 15:85 bis 60:40 variiert wird.

Ein weiterer Gegenstand der vorliegenden Erfindung ist ein Verfahren zur Herstellung von thermoplastischen Elastomerzusammensetzungen (vorzugsweise erfindungsgemäßen thermoplastischen Elastomerzusammensetzungen), wobei eine elastomere Phase (EL) und eine thermoplastische Phase (T), wobei T mindestens einen Thermoplasten (TP) und mindestens ein thermoplastisches Elastomer (TPE) umfasst, bei einer Temperatur oberhalb des Schmelz- und Erweichungspunktes von TP und TPE vermengt werden, wobei das Gewichtsverhältnis EL:T im Bereich von 100:25 bis 100:80 liegt.

Bei der erfindungsgemäßen Herstellung der thermoplastischen Elastomerzusammensetzungen unterwirft man Zusammensetzungen, die die elastomere Phase (EL) und die thermoplastische Phase (T) enthalten, vorzugsweise einem fortgesetzten Mischungsvorgang bei einer Temperatur, welche oberhalb der höchsten Schmelz- und/oder Erweichungstemperatur von TP und TPE liegt. Bevorzugte Temperaturen oberhalb der Schmelz- und/oder Erweichungstemperatur von TP und TPE sind weiter unten genannt. Verschiedene bevorzugte Varianten des erfindungsgemäßen Herstellungsverfahrens bzw. der darin eingesetzten Komponenten sind ebenso weiter unten genannt.

Die erfindungsgemäßen thermoplastischen Elastomerzusammensetzungen bzw. die erfindungsgemäß veränderten oder hergestellten thermoplastischen Elastomerzusammensetzungen zeichnen sich durch sehr hohe Temperatur- und chemische Beständigkeit bei gleichzeitig sehr guten mechanischen Kenngrößen in einem sehr weiten Shore-A-Härtebereich von 10 bis 100 ShA aus.

Die zuvor genannten und in den erfindungsgemäßen thermoplastischen Elastomerzusammensetzungen bzw. den erfindungsgemäßen Verfahren eingesetzten Komponenten werden im Weiteren durch folgende Buchstaben abgekürzt und sind im Folgenden genauer beschrieben:

A:      Elastomer
B:      Thermoplastisches Elastomer
C:      Thermoplast
D:      Weichmacher
E:      Vernetzungsmittel
F:      Covernetzer
G:      Stabilisator, Hilfsstoff, Farbstoff
H:      Füllstoff
I:      Verträglichkeitsvermittler

Komponente A: Elastomer

Die elastomere Phase (EL) kann jegliches im Stand der Technik bekannte Elastomer umfassen, das zu der thermoplastischen Phase (T) kompatibel bzw. damit mischbar ist. Vorzugsweise ist das Elastomer aus der Gruppe ausgewählt, die aus Styrol-Butadien-Kautschuk (SBR), StyrolblockCopolymeren (SBC), Nitrilbutadien-Kautschuk (NBR), hydriertem Nitrilbutadien-Kautschuk (H-NBR), carboxyliertem Nitrilbutadien-Kautschuk (X-NBR), Ethylen-Vinylacetat-Copolymeren (EVM), Ethylen-Propylen-Dien-Kautschuk (EPDM), Naturkautschuk (NR), Butyl-Kautschuk (IIR), Halobutylkautschuk (halogenierter IIR), Isopren-Kautschuk (IR), Chloropren-Kautschuk (CR), Acrylat-Kautschuk (ACM), Ethylen-Acrylat-Kautschuk (AEM), Epichlorhydrin-Kautschuk (ECO), epoxidiertem Naturkautschuk, Silikonkautschuk und Mischungen davon besteht.

Ethylen-Vinylacetat-Copolymere (EVM) sind Copolymerisate aus einem $\alpha$-Olefin, vorzugsweise Ethylen, und Vinylacetat. EVM sind zum Beispiel unter den Handelnamen Levapren® oder Levamelt® der Lanxess Deutschland GmbH kommerziell erhältlich. Erfindungsgemäß bevorzugt eingesetzte $\alpha$-Olefin-Copolymerisate sind die Ethylen-Vinylacetat-Copolymere Levamelt® 400, Levamelt® 450, Levamelt® 452, Levamelt® 456, Levamelt® 500, Levamelt® 600, Levamelt® 700, Levamelt® 800 und Levamelt® 900 mit 60 $\pm$ 1,5 Gew.-% Vinylacetat, 70 $\pm$ 1,5 Gew.-% Vinylacetat, 80 $\pm$ 2 Gew.-% Vinylacetat bzw. 90 $\pm$ 2 Gew.-% Vinylacetat, bzw. die entsprechenden Levapren®-Typen, wobei Levamelt® 600 besonders bevorzugt sind. In den erfindungsgemäßen Zusammensetzungen kann als Komponente ein $\alpha$-Olefin-Vinylacetat-Copolymer eingesetzt werden, es ist jedoch ebenfalls möglich, Mischungen aus zwei oder mehr $\alpha$-Olefin-Vinylacetat-Copolymeren einzusetzen. Die Vernetzung bei EVM erfolgt peroxidisch.

Nitrilbutadien-Kautschuk (NBR) ist ein Copolymerisat aus Acrylnitril (ACN) und 1,3-Butadien. Dabei kann der Nitrilanteil variiert werden. NBR läst sich aufgrund seiner enthaltenen Doppelbindungen sowohl peroxidisch als auch über Phenolarze oder Schwefel vernetzen. In den erfindungsgemäßen thermoplastischen Elastomerzusammensetzungen kommen vorzugsweise die peroxidische Vernetzung und die Vernetzung über Phenolharze zum Einsatz. Beispiele für erfindungsgemäß einzusetzende NBR sind unter den Handelsnamen Perbunan®, Krynac®, Buna® N, oder Europrene® N bekannt und kommerziell erhältlich.

Hydrierter Nitrilbutadien Kautschuk (H-NBR) wird durch Hydrierung der in NBR enthaltenen Doppelbindungen erhalten. H-NBR lässt sich peroxidisch vernetzen. Beispiele für erfindungsgemäß einzusetzende H-NBR sind unter den Handelsnamen THERBAN® (Lanxess) und THERBAN® AT (Lanxess) bekannt und kommerziell erhältlich.

Sogenannter carboxylierter Nitrilbutadien-Kautschuk (X-NBR) ist NBR, der an den Doppelbindungen des Butadien Carbonsäuregruppen enthält. Die Carbonsäuregruppen sind statistisch über das Polymer verteilt und vorzugsweise enthält ein solches Polymer 10% oder weniger an Carbonsäuregruppen, bezogen auf die mögliche Anzahl an carboxylierbaren Kohlenstoff-Kohlenstoff-Doppelbindungen im Polymer. Aufgrund der im Polymer enthaltenen Carboxylgruppen lässt sich der X-NBR neben peroxidischer und Phenolharzvernetzung auch über Metallionen vernetzen, die koordinativ von den (deprotonierten) Carbonsäuregruppen gebunden werden können. Ein Beispiel eines erfindungsgemäß einsetzbaren X-NBR ist unter dem Handelsnamen Krynac® X (Lanxess) bekannt und kommerziell erhältlich.

Styrol-Butadien-Kautschuk (SBR) ist ein Copolymerisat aus Styrol und 1,3-Butadien, wobei erfindungsgemäß der Styrolgehalt unter 25% (im Verhältnis zum Butadiengehalt) liegen sollte, da bei höherem Styrolgehalt der Kautschuk thermoplastische Eigenschaften annimmt. SBR ist sowohl peroxidisch als auch durch Phenolharze sowie durch Schwefel vernetzbar. In den erfindungsgemäßen Zusammensetzungen kommen hier vorzugsweise die peroxidische Vernetzung und die Vernetzung über Phenolharze zum Einsatz. Beispiele für erfindungsgemäß einzusetzende SBR sind unter den Handelsname KRALEX® SBR und Europrene® SBR bekannt und kommerziell erhältlich.

Styrolblockcopolymere (SBC) sind Copolymere aus verschiedenen Polymerblöcken, von denen mindestens ein Block ein Polystyrolblock ist. Stärker bevorzugt weist ein SBC jedoch die Struktur eines Triblockcoplymers auf, bei dem der Mittelblock aus einem von Polystyrol unterschiedlichen Polymer aufgebaut ist, wobei die beiden Blöcke an den beiden Enden jeweils einen Polystyrolblock bilden. Als thermoplastische Elastomere stellen sie erfindungsgemäß einen Sonderfall dar. Erfindungsgemäß werden die SBC in vernetzbare (SBC-V) und nicht-vernetzte SBC eingeteilt.

Ein Beispiel für ein nicht-vernetztes SBC ist SEBS (Styrol-Ethylen-Butylen-Styrol). SEBS sind Triblockcopolymere aus 1,3-Butadien und Styrol. Das SEBS-Polymer ist aus drei Blöcken aufgebaut, wobei die beiden Endblöcke durch Polystyrol und der Mittelblock aus Butadien polymerisiert wird. Das Polymer wird im Anschluß daran hydriert. Ein weiteres Beispiel für ein SBC, das erfindungsgemäß eingesetzt werden kann und nicht vernetzt ist, ist SEPS (Styrol-Ethylen/Propylen-Styrol). Weiterhin sind hier als Beispiele aber auch alle weiteren bekannten SBC zu nennen, die hydriert wurden und somit keine C-C-Doppelbindungen enthalten. Werden erfindungsgemäß hydrierte SBC (z.B. SEBS, hydriertes SEPS, hydriertes SEEPS etc.) in der elastomeren Phase (EL) verwendet, werden diese zur Herstellung der thermoplastischen Elastomerzusammensetzungen vorzugsweise mit der thermoplastischen Phase (T) intensiv gemischt. Beispiele für erfindungsgemäß einzusetzende hydrierte SBC sind unter den Handelsnamen Kraton®, Septon®, Europrene® und Taipol® bekannt und kommerziell erhältlich.

SBC-V sind SBC, die eine vernetzbare Gruppe enthalten, wie beispielsweise SBS (Styrol-Butadien-Styrol), SIS (Styrol-Isopren-Styrol), SIBS (Styrol-Isopren/Butadien-Styrol), ein SBC mit $\alpha$-Methylstyrolblock und einem Isoprenblock, oder ein Styrolblock-Copolymer mit (weichem) Vinylpolydienblock.

Das SBC mit $\alpha$-Methylstyrolblock und einem Isoprenblock ist ein Triblock-Coplymer, das aus $\alpha$-Methylstrol und Isopren copolymerisiert wird. Die beiden Endblöcke werden aus $\alpha$-Methylstyrol polymerisiert, wobei der Mittelock aus polymerisierten Isopren-Monomeren besteht. Das Produkt mit dem Handelsnamen Septon® V (Kuraray) ist ein solches Polymer und lässt sich peroxidisch vernetzen, kann aber erfindungsgemäß auch unvernetzt zum Einsatz kommen. Erfindungsgemäß kommt hier vorzugsweise die peroxidische Vernetzung zum Einsatz.

Das Styrolblock-Copolymer mit dem weichen Vinylpolydienblock ist ein Triblock-Coplymer, das aus Styrol und vorwiegend vinylisch polymerisiertem Isopren copolymerisiert wird. Die beiden Endblöcke werden aus Styrol polymerisiert, wobei der Mittelock aus polymerisierten Isopren-Monomeren mit vorwiegend vinylischem Charakter besteht. Das Produkt mit dem Handelsnamen Hybrar® (Kuraray) ist ein solches Polymer und lässt sich peroxidisch sowie durch Phenolharze oder Schwefel vernetzen, kann aber erfindungsgemäß auch unvernetzt zum Einsatz kommen. Erfindungsgemäß kommen hier vorzugsweise die peroxidische Vernetzung und die Vernetzung über Phenolharze zum Einsatz.

Das SBS ist ein Triblock-Copolymer, das aus Styrol und 1,3-Butadien copolymerisiert wird. Die beiden Endblöcke werden aus Styrol polymerisiert, wobei der Mittelock aus polymerisierten 1,3-Butadien-Monomeren besteht. Das Produkt mit dem Handelsnamen Kraton® D (Kraton) ist ein solches Polymer und lässt sich peroxidisch und mit Phenolharzen oder Schwefel vernetzen, kann aber erfindungsgemäß auch unvernetzt zum Einsatz kommen. Erfindungsgemäß kommen hier vorzugsweise die peroxidische Vernetzung und die Vernetzung über Phenolharze zum Einsatz.

Wird als Elastomer erfindungsgemäß der Ethylen-Acrylat-Kautschuk (AEM) eingesetzt, so kann die Vernetzung peroxidisch, durch Metallionen oder durch Diaminverbindungen stattfinden. AEM ist ein Copolymerisat aus Ethylen und Methylacrylat. Kommerziell erhältlich ist dieser beispielsweise als Vamac® von der Firma Du Pont.

Acrylat-Kautschuke (ACM) sind Copolymere aus AcrylsäureAlkylester und einem weiteren vinylischen Polymer, wie beispielsweise ein Copolymer aus Acrylsäureester und 2-Chlorethylvinylether oder ein Copolymer aus Acrylsäureester und Acrylnitril. Die Art der Vernetzung solcher Polymere ist abhängig von den verwendeten Comonomeren.

Naturkautschuk (NR) ist ein Homopolymerisat des Isoprens, das fast ausschließlich 1,4-cis-Verknüpfung aufweist. Typischerweise liegt das mittlere Molgewicht Mw bei etwa $2*10^6$ g/mol. Wird erfindungsgemäß als Elastomer Naturkautschuk verwendet, so wird dieser vorzugsweise peroxidisch, phenolisch oder mithilfe von Schwefel vernetzt.

Isopren-Kautschuk (IR) ist die synthetisch produzierte Variante des Naturkautschuks. Sie unterscheidet sich von diesem in erster Linie durch die etwas geringere chemische Reinheit. Dies liegt daran, dass die zur Polymerisation eingesetzten Katalysatoren eine geringere Effektivität besitzen als die in der Natur vorkommenden Enzyme. Die Reinheit von Naturkautschuk liegt vorzugsweise bei mehr als 99,9%, wohingegen sie bei den synthetisch hergestellten IR - je nach eingesetztem Katalysator - nur etwa 92% bis 97% erreicht. Wie der Naturkautschuk ist auch IR peroxidisch, phenolisch oder mit Schwefel vernetzbar. Vorzugsweise erfolgt die Vernetzung phenolisch oder mithilfe von Peroxiden.

Ethylen-Propylen-Dien-Kautschuk (EPDM) ist ein terpolymerer, synthetischer Kautschuk. EPDM gehört zu den statistischen Copolymeren mit gesättigtem Polymergerüst. Die Herstellung erfolgt vorzugsweise mit Metallocen oder Ziegler-Natta-Katalysatoren auf Basis von Vanadium-Verbindungen und Aluminium-Alkyl-Chloriden. Als Dien werden unkonjugierte Diene eingesetzt, von denen lediglich eine Doppelbindung an der Polymerkettenbildung beteiligt ist, so dass weitere Doppelbindungen außerhalb des direkten Kettengerüsts verbleiben und mit Schwefel, peroxidisch oder phenolisch vernetzt werden können. Als Dien-Komponente werden Dicyclopentadien (DCP), 1,4-Hexadien oder Ethylidennorbornen (ENB, IUPAC: 5-Ethyliden-2-norbornen) eingesetzt. Die Diene unterscheiden sich bezüglich der Vernetzungsgeschwindigkeit. DCP hat die niedrigste, ENB die höchste Reaktivität.

Butyl-Kautschuk (IIR) wird auch Isobuten-Isopren-Kautschuk genannt. Er ist ein Kunststoff aus der Gruppe der Elastomere und zählt zu den Synthesekautschuken. Er ist ein Copolymerisat aus Isobuten und Isopren, wobei er vorzugsweise Isobuten in einer Menge von 95 bis 99 Mol-% und Isopren in einer Menge von 1-5 Mol-% umfasst, bezogen auf sein gesamtes Molgewicht. Er wird erfindungsgemäß vorzugsweise phenolisch oder mithilfe von Schwefel vernetzt.

Halobutyl-Kautschuk (halogenierter IIR) ist Butyl-Kautschuk, der vorzugsweise mit Chlor oder Brom halogeniert wurde. Dazu wird der Kautschuk vorzugsweise in einem inerten Lösungsmittel gelöst und unter kräftigem Rühren wird Chlorgas oder flüssiges Brom zugegeben. Die resultierenden Halogenwasserstoffe werden mit Natronlauge neutralisiert.

Chloropren-Kautschuk (CR) wird auch Polychloropren oder Chlorbutadien-Kautschuk genannt und ist ein Synthesekautschuk, der auch unter dem Markennamen Neopren® bekannt ist. Neopren® ist eine Marke des Unternehmens DuPont, Handelsnamen anderer Hersteller sind z. B. Baypren® von Lanxess. Die Herstellung erfolgt durch Polymerisation von 2-Chlor-1,3-butadien (Chloropren).

Epichlorhydrin-Kautschuk (ECO) wird durch ringöffnende Polymerisation von Epichlorhydrin gegebenenfalls in Gegenwart von weiteren Comonomeren hergestellt. Kommerziell ist Epichlorhydrin-Kautschuk beispielsweise unter dem Handelsnamen HydrinECO® der Firma Zeon erhältlich.

Silikon-Kautschuke werden aus in den gummielastischen Zustand überführbare Massen hergestellt, die Poly(organo)siloxane enthalten und die für Vernetzungsreaktionen zugängliche Gruppen aufweisen. In anderen Worten sind Silikonkautschuke Poly(organo)siloxane, die mit einem Vernetzungsmittel vernetzt sind. Die Vernetzung kann über (organische) Peroxide erfolgen, sie kann jedoch auch dadurch zustande kommen, dass Si-H-Gruppen katalytisch an siliziumgebundene Vinylgruppen addiert werden, wobei beide Gruppen in die Polymerketten bzw. an deren Ende eingebaut sind.

Unter epoxidiertem Naturkautschuk wird Naturkautschuk verstanden, wie er vorstehend definiert ist, der epoxidiert wurde.

Komponente B: Thermoplastisches Elastomer (TPE):

Wie bereits weiter oben genannt ist das thermoplastische Elastomer erfindungsgemäß ein TPC, TPA, TPO oder TPU, wobei TPC und TPA erfindungsgemäß bevorzugt sind. Dem Fachmann sind entsprechende TPE und deren Herstellung bekannt.

Vorzugsweise erfindungsgemäß geeignete TPC (TPE auf Copolyester-Basis) sind im Allgemeinen Copolyester in Form von Copolymeren, die Monomer-Bausteine in der PolymerHauptkette aufweisen, die über Ester-Gruppen (-C(=O)-O-) verbunden sind. Solche thermoplastischen Copolyesterelastomere können durch Polykondensation hergestellt werden. Solche Copolyester sind bevorzugt Multiblock-Copolyester, die in der Regel kristalline Segmente aus harten Blöcken (X) und amorphe Segmente aus weichen Blöcken (Y) aufweisen. Geeignete Monomer-Komponenten zum Aufbau von harten Blöcken (X) und weichen Blöcken (Y) in Multiblock-Copolyestern sind dem Fachmann bekannt. Die erfindungsgemäß bevorzugt eingesetzten Copolyester weisen Schmelzpunkte bzw. Erweichungspunkte Bereich von 160°C bis 300°C, bevorzugt 165°C bis 270°C, besonders bevorzugt 170°C bis 220°C auf. Bevorzugte TPC der vorliegenden Erfindung sind lineare Multiblock-Polyester mit statistischer Verteilung von hochschmelzenden, harten Polyesterblöcken und niedrigschmelzenden, weichen Polyesterblöcken. Dabei bilden die harten Blöcke kristalline Bereiche, die weichen Blöcke amorphe Bereiche, die bei Anwendungstemperaturen der TPC elastisches Verhalten bedingen. Die harten Polyesterblöcke sind vorzugsweise aufgebaut aus kurzkettigen Dicarbonsäuren mit weniger als 4 C-Atomen oder aromatischen Dicarbonsäuren oder Mischungen von Dicarbonsäuren. Bevorzugt sind aromatische Dicarbonsäuren, besonders bevorzugt Isophthalsäure oder Terephthalsäure. Die Alkoholkomponente ist bevorzugt ebenfalls difunktionell und besteht aus kurzkettigen Alkyldiolen oder kurzkettigen Polyoxyalkylendiolen mit weniger als 3 Wiederholungseinheiten oder Mischungen unterschiedlicher Diole. Bevorzugt sind kurzkettige Diole wie Ethylenglykol, 1,3-Propandiol, 1,4-Butandiol, 1,4-Cyclohexandimethanol, besonders bevorzugt ist 1,4-Butandiol. Die weichen Polyesterblöcke bestehen vorzugsweise aus aliphatischen oder aromatischen Dicarbonsäuren, bevorzugt aus aromatischen Dicarbonsäuren, ganz besonders bevorzugt aus Isophthalsäure oder Terephthalsäure. Um weiche Bereiche bei den TPC zu erzeugen werden unterschiedliche Dioltypen verwendet, Polyetherdiole wie Polyethylenglykole, Polypropylenglykole, Polyethylen-copropylenglykole, Polytetramethylenglykole oder weiche Polyesterdiole aufgebaut aus Alkandicarbonsäuren, beispielweise Adipinsäure oder Sebacinsäure, und Alkandiolen, oder Polycaprolactondiole oder aliphatische Polycarbonatdiole. Es können jedoch auch Mischungen von Diolen eingesetzt werden. Bevorzugt sind harte TPC Bereiche, aufgebaut aus Terephthalsäure und kurzkettigen Diolen, besonders bevorzugt 1,4-Butandiol, kombiniert mit weichen Bereichen, bevorzugt aufgebaut aus Terephthalsäure und Polyetherdiolen, ganz besonders bevorzugt aus Polytetramethylenglykol. Die als Komponente B in den erfindungsgemäßen Zusammensetzungen geeigneten Copolyester können gemäß dem Fachmann bekannten Verfahren hergestellt werden bzw. sind kommerziell erhältlich. Geeignete kommerziell erhältliche Copolyester sind z. B. TICONA - Riteflex®, P.GROUP - PIBIFLEX®, DSM - Arnitel®, Kolon - KOPEL-PEL®, PTS - Uniflex®, Ria-Polymers - Riaflex®, LG Chem. - KEYFLEX®, und DuPont - Hytrel®.

TPA der vorliegenden Erfindung sind dadurch gekennzeichnet, dass Sie als harte, kristalline Segmente Polyamide besitzen. Die weichen, amorphen Bereiche bestehen aus Polyethern und/oder Polyestern. Man unterscheidet Polyesteramide, Polyetheresteramide, Polycarbonatesteramide und Polyether-blockamide. Polyesteramide, Polyetheresteramide und Polycarbonatesteramide werden durch Reaktion von aromatischen Diisocanaten mit aliphatischen Dicarbonsäuren, die die Polyamidblöcke bilden, und carboxylterminierten aliphatischen Polyestern (resultierend in Polyesteramiden), carboxylterminierten aliphatischen Polyesterethern (resultierend in Polyetheresteramiden) und carboxylterminierten Polycarbonatdiolen (resultierend in Polycarbonatesteramiden) gebildet. Polyether-blockamide werden durch Reaktion von carboxylterminierten Polyamiden und hydroxyterminierten Polyetherdiolen gebildet. Bevorzugt sind als TPA Polyether-blockamide, besonders bevorzugt solche mit Polytetramethylenglykol als Weichsegment. Geeignete kommerziell erhältliche TPA sind Arkema - Pebax®, DK Kunststoffservice GmbH - Multiflex®, und EVONIK Industries/Degussa - VESTAMID® E.

Als erfindungsgemäße TPO sollen von den in Kapitel 5 von "G. Holden, H. R. Kricheldorf, R. P. Quirk (Eds.), Thermoplastic Elasomers, Carl Hanser Verlag, 3rd Ed., Munich (2004)" beschriebenen Polymeren bevorzugt die Blockcopolymere gelten (Kap. 5.3). Besonders bevorzugt für die hier beschriebene Anwendung seien TPO aufgebaut aus Blockcopolymeren von PP und PE.

Bevorzugte TPU im Sinne der vorliegenden Erfindung sind thermoplastische Elastomere auf Polyurethan-Basis, wie z. B. die von Bayer erhältlichen Desmopan®, Texin® und Utechllan® Typen.

Komponente C: Thermoplast (TP):

Die als Komponente C erfindungsgemäß geeigneten Thermoplaste sind vorzugsweise mit dem TPE in der thermoplastischen Phase (T) in jedem Verhältnis mischbar. Besonders bevorzugt sind Thermoplaste, deren chemische Zusammensetzung der chemischen Zusammensetzung eines der Blöcke des eingesetzten TPE entspricht.

Wie bereits weiter oben ausgeführt ist der Thermoplast ein Polyester, Polyamid oder Polyurethan.

Bei der Verwendung eines Polyesters als Thermoplast ist darauf zu achten, dass nur Polyester eingesetzt werden, die tatsächlich thermoplastische Eigenschaften aufweisen. Hier sollen erfindungsgemäß explizit Polyester ausgenommen sein, die keine thermoplastischen Eigenschaften aufweisen, insbesondere Polyester, die als Weichmacher eingesetzt werden, oder Polyesterharze. Bevorzugt, werden erfindungsgemäß Polyester eingesetzt, die ein mittleres Molekulargewicht von > 10.000 g/mol aufweisen. Gleiches gilt auch, wenn als Thermoplaste Polyamide oder Polyurethane eingesetzt werden. Weiterhin bevorzugt ist es, dass Polyester eingesetzt werden, die in der Polymerhauptkette aromatische Einheiten aufweisen.

Beispiele für erfindungsgemäß verwendbare Polyester sind Polyalkylenterephthalate oder Polyalkylenphthalate, wobei Polyalkylenterephthalate stärker bevorzugt sind. Besonders bevorzugt sei hier das Polybutylenterephthalat (PBT) genannt, das dem harten Segment im TPC entspricht, und deshalb beispielsweise bevorzugt in der thermoplastischen Phase (T) mit diesem eingesetzt wird.

So eignen sich beispielsweise auch besonders Polyamide (PA) bei der Verwendung von TPA (trägt in den harten Segmenten PA12) in der thermoplastischen Phase (T).

Bei der Verwendung von TPU als Komponente B sind die Urethan-Segmente ähnlich denen der Amidgruppe, so dass sich PA und TPU mischen lassen und auch in der thermoplastischen Phase (T) gemeinsam eingesetzt werden können. Weiterhin eignen sich erfindungsgemäß bei TPU als Komponente B zudem Polycarbonate (PC) sowie Acrylnitril-Butadien-Styrol (ABS) als Komponente C.

Polyalkylenterephthalate werden vorzugsweise durch Polykondensation von Terephthalsäure und Alkyldiol hergestellt. Besonders bevorzugt wird als Alkyldiol 1,4-Butandiol verwendet, so dass Polybutylenterephthalat (PBT) entsteht. Die erfindungsgemäß bevorzugt eingesetzten Polyalkyltherephthalate weisen Schmelzpunkte bzw. Erweichungspunkte im Bereich von 160°C bis 300°C, bevorzugt 175°C bis 270°C, besonders bevorzugt 200°C bis 230°C auf. Bekannte Handelsnamen und deren Hersteller sind: Arnite® (DSM), Celanex® (Ticona), Crastin® (DuPont), DYLOX® (Hoffmann + Voss GmbH), Later® (LATI), Pocan® (Lanxess), Schuladur® (A. Schulman), Ultradur® (BASF), Valox® (Sabic Innovative Plastics) und VESTODUR® (Evonik Industries AG).

Polyamide (PA) sind Kondensationsprodukte aus Aminocarbonsäuren, Lactamen und/oder Dicarbonsäuren und Diaminen. Die erfindungsgemäß verwendeten PA gehören zu den dem Fachmann bekannten breiten Spektrum der unterschiedlichen Polyamide (PA6 PA6.6 PA12 usw..) an. Die erfindungsgemäß bevorzugt eingesetzten PA weisen Schmelzpunkte bzw. Erweichungspunkte im Bereich von 160°C bis 300°C, bevorzugt 165°C bis 270°C, besonders bevorzugt 180°C bis 230°C auf. Bekannte Handelsnamen und deren Hersteller sind: Akulon (DSM), Durethan (Lanxess), Frianyl (NILIT Plastics Europe, ehem. Frisetta Polymer), Akromid (Akroloy), Schulamid (A. Schulman), Technyl (Rhodia), Torzen (Invista), Ultramid, Miramid (BASF), UNYLON (UNYLON Polymers), Vestamid (Evonik Industries) und Zytel (DuPont).

Komponente D: Weichmacher:

Geeignete Weichmacher sind dem Fachmann grundsätzlich bekannt. Geeignete Weichmacher für polare Elastomere (EVM, NBR, H-NBR X-NBR, AEM, ACM etc.) sind z. B. Esterweichmacher, wie Phthalsäureester, bspw. Dioctylphthalat, Diisooctylphthalat, Dinonylphthalat oder Diisodecylphthalat; aliphatische Ester, wie Dioctylsäureester oder Dioctylsebacinsäureester; Phosphorsäureester, wie Trikresylphosphorsäureester, Diphenylkresylsäureester oder Trioctylphosphat; Polyester, wie Polyphthalsäureester, Polyadipinsäureester oder Polyesterether.

Geeignete Weichmacher für unpolare Elastomere (SBR, EPDM, SBC etc.) sind technische oder medizinische Mineral- oder Weißöle, native Öle, wie beispielsweise Soja- oder Rapsöl, Alkylsulfonylester, insbesondere Alkylsulfonylphenylester, wobei die Alkylsubstituenten lineare und/oder verzweigte Alkylketten mit >5 C-Atomen enthalten. Ferner Di- oder Trialkylester der Mellitsäure, wobei die Alkylsubstituenten vorzugsweise lineare und/oder verzweigte Alkylketten mit >4 C-Atomen enthalten. Des Weiteren finden auch Alkylester von Di-, Tri- und höheren Polycarbonsäuren, wobei die Alkylsubstituenten vorzugsweise lineare und/oder verzweigte Alkylketten sind, als entsprechende Weichmacher Verwendung. Als Beispiele seien genannt Adipinsäuredi-2-ethylhexylester und Tributyl-O-acetylcitrat. Weiterhin können auch Carbonsäureester von Mono- und/oder Polyalkylenglykolen als Weichmacher eingesetzt werden, wie beispielsweise Ethylenglykoladipat. Als geeignete Weichmacher können auch Mischungen der beschriebenen Substanzklassen eingesetzt werden.

Komponente E: Vernetzungsmittel:

Je nach verwendetem Elastomer ist einem Fachmann bekannt, welches Vernetzungsmittel er nehmen kann, um eine Vernetzung zu erzielen. Erfindungsgemäß sind die weiter oben genannten Elastomere entweder durch Zusatz von Peroxiden, Phenolharzen, Schwefel oder Metallionen vernetzbar.

Als radikalische Vernetzungsinitiatoren (Vernetzungsmittel) geeignete Peroxide sind dem Fachmann bekannt. Beispiele hierfür sind organische Peroxide, z. B. Alkyl- und Arylperoxide, Alkyl-Persäureester, Aryl-Persäureester, Diacylperoxide, polyvalente Peroxide wie 2,5-Dimethyl-2,5-di(tert-butylperoxy)hexin-3 (z. B. Trigonox® 145-E85 oder Trigonox® 145-45B), Di-tert-butylperoxid (z. B. Trigonox® B), 2,5-Dimethyl-2,5-di(tert-butylperoxy)hexin (z. B. Trigonox® 101), tert-Butyl-Cumyl-Peroxid (z. B. Trigonox® T), Di(tert-butylperoxyisopropyl)benzol (z. B. Perkadox® 14-40), Dicumyl-Peroxid (z. B. Perkadox® BC 40), BenzoylPeroxid, 2,2'-Bis(tert-butylperoxy)diisopropylbenzol (z. B. Vulcup®40 AE), 3,2,5-Trimethyl-2,5-di(benzoylperoxy)hexan und (2,5-Bis(tert- butylperoxy)-2,5-dimethylhexan, 3,3,5,7,7-Pentamethyl-1,2,4-trioxepan (z. B. Trigonox® 311) .

Bevorzugt werden solche Peroxide eingesetzt, deren Vernetzungstemperaturen oberhalb der Schmelz- bzw. Erweichungstemperaturen der Komponente A liegen. Aufgrund der hohen Schmelz- bzw. Erweichungstemperatur der erfindungsgemäß als Komponenten B und C eingesetzten thermoplastischen Phase erfolgt erfindungsgemäß die Vernetzung der elastomeren Phase zur Herstellung der thermoplastischen Elastomerzusammensetzungen vorzugsweise in einer entsprechend heißen Schmelze. Dies erfordert - in einer bevorzugten Ausführungsform - den Einsatz von Peroxiden mit hohen Vernetzungstemperaturen. Peroxide mit niedrigeren (üblichen) Vernetzungstemperaturen zerfallen bereits bei erstem Kontakt mit der Polymerschmelze und werden nicht homogen eingemischt und vernetzen die elastomere Phase nicht ausreichend oder inhomogen. Besonders bevorzugt werden daher erfindungsgemäß Peroxide eingesetzt, die Vernetzungstemperaturen von $\geq$ 175°C, besonders bevorzugt $\geq$ 180°C, ganz besonders bevorzugt $\geq$ 185°C, insbesondere ganz besonders bevorzugt $\geq$ 190°C und weiter ganz besonders bevorzugt $\geq$ 200°C aufweisen.

Bei Verwendung eines Peroxids als Vernetzungsmittel ist es weiterhin erfindungsgemäß bevorzugt, dass die (noch vernetzbaren) thermoplastischen Elastomerzusammensetzungen das Peroxid in einer Menge von 0,2 bis 10 Gew.-Teilen pro 100 Gew.-Teile der elastomeren Phase (EL) (phr), bevorzugt 0,5 bis 8 phr, besonders bevorzugt 1 bis 6 phr aufweisen.

Insbesondere bei der Verwendung von Dien-haltigen Kautschuken als Komponente A, wie z.B. SBR oder NBR sowie H-NBR oder EPDM, eigen sich neben der peroxidischen Vernetzung auch Phenolharze zur Vernetzung der Komponente A. Zum Einsatz kommen hierbei vorzugsweise Phenolharze mit ausreichend hoher Reaktivität bei Mischtemperaturen von mindestens 220°C. Hier sind auch bromierte Phenolharze zu nennen.

Zur Beschleunigung der Phenolharzvernetzung kommen dem Fachmann bekannte anorganische Verbindungen zum Einsatz. Zur Beschleunigung und Katalyse der Reaktion können beispielsweise $SnCl_2$ und/oder ZnO und/oder $ZnCl_2$ eingesetzt werden. Es können aber auch halogenhaltige Elastomere eingesetzt werden. Besonders bevorzugt wird ZnO eingesetzt, da dieses zudem als Katalysator wirkt.

Auch ist es bei den nicht bromierten Phenolharzen sinnvoll Halogenspender in Form von Lewissäuren oder Chloprenrubber zuzugeben. Somit kann in den thermoplastischen Elastomerzusammensetzungen gemäß der vorliegenden Erfindung eine Kombination aus mindestens einem Phenolharz und mindestens einer Cl-haltigen Lewissäure, bevorzugt $SnCl_2$, als Vernetzungsmittel eingesetzt werden. Als Cl-haltige Lewissäure wird vorzugsweise $ZnCl_2$ oder $SnCl_2$ eingesetzt, wobei es bevorzugt ist, dass bei dem Einsatz von $SnCl_2$ zusätzlich ZnO eingesetzt wird. Alternativ zu den genannten Lewissäuren kann auch eine Mischung aus Chloropren-Kautschuk und ZnO eingesetzt werden. Im Fall der Verwendung von bromierten Phenolharzen ist der Einsatz einer Lewissäure vorzugsweise nicht notwendig, allerdings wird dann vorzugsweise zusätzlich ZnO eingesetzt. Hierfür geeignete Phenolharze sind dem Fachmann bekannt, und werden üblicherweise durch Umsetzung von Phenolen mit Aldehyden erhalten (Phenol-Formaldehydharz) . Hierfür geeignete Phenolharze sind z. B. die Umsetzungsprodukte von Octylphenol mit Formaldehyd, z. B. ist SP-1045 H (SP-1045, HRJ-10518 H von Schenectady International Inc.) geeignet, das ein Octylphenol-Formaldehydharz ist, das Methylolgruppen enthält, oder im Falle von bromierten Phenolharzen bromierte Oktylphenolharze, beispielsweise solche mit den Handelsnamen SP-1055 SP-1056. Geeignete Cl-haltige Lewissäuren sind dem Fachmann bekannt. Bevorzugt wird $SnCl_2$ oder Chloropren-Kautschuk eingesetzt.

Bei einem Einsatz der Kombination mindestens eines Phenolharzes mit mindestens einer Cl-haltigen Lewis-

säure, bevorzugt SnCl$_2$, wird vorzugsweise das mindestens eine Phenolharz in einer Menge von 2 bis 5 Gewichtsteilen, bezogen auf die Gesamtmenge der thermoplastischen Elastomerzusammensetzung, eingesetzt, und die Cl-haltige Lewissäure vorzugsweise in einer Menge von 0,2 bis 0,7 Gewichtsteilen, bezogen auf die Gesamtmenge der thermoplastischen Elastomerzusammensetzung, eingesetzt.

Die Vernetzung mit Hilfe von Schwefel ist eine der ältesten Vernetzungsmöglichkeiten von Kautschuken, die dem Fachmann auf diesem Gebiet bekannt ist.

Komponente F: Covernetzer:

In einer bevorzugten erfindungsgemäßen Ausführungsform enthalten die thermoplastischen Elastomerzusammensetzungen zusätzlich mindestens einen Covernetzer als Komponente F. Der Covernetzer wird in einem Gewichtsverhältnis Elastomer zu Covernetzer im Bereich von 100:10 bis 100:2 und stärker bevorzugt im Bereich von 100:8 bis 100:3 eingesetzt.

Geeignete Covernetzer für Peroxide als Vernetzungsmittel sind zum Beispiel ausgewählt aus der Gruppe bestehend aus Triallylisocyanurat (TAIC) (z. B. DIAK7™ von DuPont), Trimethylolpropantrimethacrylat (TRIM) (z.B. Rhenogran TRIM® S von Rheinchemie), N,N'-m-Phenylendimaleimid (z. B. HVA-2® von DuPont Dow), Triallylcyanurat (TAC), flüssiges Polybutadien (z. B. Ricon® D153 von Ricon Resins), p-Chinodixon, p,p'-Dibenzoylchinodioxin, N-Methyl-N,N-dinitrosoanilin, Nitrobenzol, Diphenylguanidin, Trimethylolpropan-N,N'-m-phenylenmaleimid, N-Methyl-N,N'-m-phenylendimaleimid, Divinylbenzol, polyfunktionellen Methacrylatmonomeren wie Ethylenglykoldimethacrylat, Diethylenglykoldimethacrylat, Polyethylenglykoldimethacrylat, Trimethylolpropantrimethacrylat und Allylmethacrylat, und polyfunktionellen Vinylmonomeren wie Vinylbutyrat und Vinylstearat. Bevorzugt eingesetzte Covernetzer sind ausgewählt aus der Gruppe bestehend aus Trimethylolpropantrimethacrylat (TRIM), Triallylisocyanurat (TAIC), N,N'-m-Phenylendimaleimid, Triallylcyanurat (TAC) und flüssigem Polybutadien. Besonders bevorzugt wird Trimethylolpropantrimethacrylat (TRIM) als Covernetzer eingesetzt. Es ist möglich, in den erfindungsgemäßen vernetzbaren Zusammensetzungen einen Covernetzer oder zwei oder mehr Covernetzer gemeinsam einzusetzen.

Komponenten G bis I:

Geeignete Komponenten G bis I sind dem Fachmann grundsätzlich bekannt. Beispiele für geeignete Füllstoffe, Stabilisatoren, Hilfsstoffe, Farbstoffe und Verträglichkeitsvermittler sind im Folgenden genannt:

Komponente H: Füllstoffe:

Geeignete Füllstoffe sind z. B. Ruß, Kreide (Calciumcarbonat), Kaolin, Kieselerde, Talkum (Magnesiumsilikat), Aluminiumoxid-Hydrat, Aluminiumsilikat, Calciumcarbonat, Magnesiumcarbonat, Caliciumsilikat, Magnesiumsilikat, Bariumsulfat, Zinkcarbonat, calciniertes Kaolin (z. B. Polestar® 200 P), Calciumoxid, Magnesiumoxid, Titanoxid, Aluminiumoxid, Zinkoxid, silanisierte Kaoline, silanisiertes Silicat, beschichtete Kreide, behandelte Kaoline, pyrogene Kieselsäure, hydrophobierte pyrogene Kieselsäure (z. B. Aerosil® 972), synthetische, amorphe Fällungskieselsäure (Silica), Industrieruß, Graphit, nanoskalige Füllstoffe wie Kohlenstoff-Nanofibrillen, Nanoteilchen in Plättchenform oder nanoskalige Siliciumdioxid-Hydrate und Mineralien.

Komponente G: Stabilisatoren, Hilfsstoffe und Farbstoffe (Additive):

Geeignete Additive sind z. B. Verarbeitungshilfsstoffe, Metallseifen, Fettsäuren und Fettsäurederivate, Faktis ([Kunstwort]: kautschukähnlicher Stoff, der z. B. durch Einwirken von Schwefel oder Schwefelchlorid auf trocknende Öle gewonnen wird; dient zum Strecken von Kautschuk), Alterungs-, UV- oder Ozonschutzmittel wie Ozonschutzwachse, Antioxidantien, z. B. Polycarbodiimide (z. B. Rhenogran® PCD-50), substituierte Phenole, substituierte Bisphenole, Dihydrochinoline, Diphenylamine, Phenyl-Napthylamine, Paraphenylendiamine, Benzimidazole, Paraffinwachse, mikrokristalline Wachse, Pigmente, Farbstoffe wie Titandioxid, Lithopone, Zinkoxid, Eisenoxid, Ultramarinblau, Chromoxid, Antimonsulfid; Stabilisatoren wie Wärmestabilisatoren, Stabilisatoren gegen Bewitterung; Oxidationsschutzmittel, z. B. p-Dicumyldiphenylamin (z. B. Naugard® 445), styrolisiertes Diphenylamin (z. B. Vulcanox® DDA), Zink-Salz von Methylmercaptobenzimidazol (z. B. Vulcanox® ZMB2), polymerisiertes 1,2-Dihydro-2,2,4-trimethylchinolin (z. B. Vulcanox® HS), Thiodiethylen-bis(3,5-di-tert-butyl-4-hydroxy)hydrocinamat, Thiodiethylen-bis[3-(3,5-di-tert-butyl-4-hydroxyphenyl)propionat] (z. B. Irganox® 1035), Gleitmittel, Entformungsmittel, Antiflammmittel (Flammschutzmittel), Haftvermittler, Markierungsstoffe, Mineralien sowie Kristallisationsbeschleuniger und -verzögerer.

Als weitere Additive können Prozesshilfstoffe, Stabilisatoren oder Füllstoffe zugegeben werden. Prozessöle können bei Bedarf zugegeben werden, jedoch vorzugsweise <5 Gew.%, bevorzugt <2 Gew.%. Gemäß einer weiteren Ausführungsform der Erfindung werden keine Prozessöle zugesetzt.

Als Prozesshilfsstoffe und Stabilisatoren seien genannt: Antistatika, Antischäummittel, Gleitmittel, Dispergiermittel, Trennmittel, Anti-Blocking-Agienzien, Radikalfänger, Antioxidantien, Biozide, Fungizide, UV-Stabilisatoren, sonstige Lichtschutzmittel, Metalldesaktivatoren, des Weiteren auch Additive wie Schäumhilfen, Treibmittel, Flammschutzmittel, Rauchgasunterdrücker, Schlagzähmodifikatoren, Haftmittel, Anti-Fogging-Mittel, Farbstoffe, Farbpigmente, Farbmasterbatches, Viskositätsmodifikatoren. Als Füllstoffe seien beispielsweise Kaolin, Glimmer, Calciumsulfat, Calciumcarbonat, Silicate, Silika, Talkum, Ruß, Graphit oder synthetische Fasern erwähnt.

Komponente I: Verträglichkeitsvermittler:

Die erfindungsgemäßen Zusammensetzungen bzw. erfindungsgemäß hergestellten Zusammensetzungen können zudem mindestens einen Verträglichkeitsvermittler enthalten, vorzugsweise um die thermoplastische Phase (T) an die elastomere Phase (EL) anzubinden.

Verträglichkeitsvermittler sind dem Fachmann grundsätzlich bekannt. Beispielsweise sind funktionalisierte Polyolefine bzw. Polyolefin-Copolymere als Verträglichkeitsvermittler geeignet. Geeignete funktionelle Gruppen der funktionalisierten Polyolefine oder Polyolefin-Copolymere sind Carboxylgruppen, Carbonylgruppen, Halogenatome, Aminogruppen, Hydroxygruppen oder Oxazolingruppen. Bevorzugt sind die Polyolefine bzw. Polyolefin-Copolymere mit Carboxylgruppen funktionalisiert. Herstellungsverfahren für geeignete mit Carboxylgruppen funktionalisierte Polyolefine sind zum Beispiel in DE 41 23 963 A1 und der darin genannten Literatur offenbart.

Bevorzugt ist der Verträglichkeitsvermittler in den Zusammensetzungen gemäß der vorliegenden Erfindung ein Copolymer auf Basis der entsprechenden erfindungsgemäßen Komponente A, hier am Beispiel des EVM als Komponente A, $\alpha$-Olefin-Vinylacetat-Copolymer als Polymerrückrad, das mit Carboxylgruppen, Carbonylgruppen, Halogenatomen, Aminogruppen, Hydroxygruppen oder Oxazolingruppen, bevorzugt mit Carboxylgruppen, funktionalisiert ist. Besonders bevorzugt wird ein Verträglichkeitsvermittler in den Zusammensetzungen gemäß der vorliegenden Erfindung eingesetzt, der mittels Pfropfung von $\alpha,\beta$-ethylenisch ungesättigten Mono- und/oder Dicarbonsäuren oder deren Derivaten auf ein $\alpha$-Olefin-Vinylacetat-Copolymerrückrad erhalten wird. Geeignete Verfahren zur Herstellung des besonders bevorzugten Verträglichkeitsvermittlers sind dem Fachmann bekannt und zum Beispiel in EP 1 801 162 A1 genannt.

Herstellung der erfindungsgemäßen Zusammensetzungen und Vernetzen oder Mischen zu thermoplastischen Elastomerzusammensetzungen:

Die thermoplastischen Elastomerzusammensetzungen gemäß der vorliegenden Erfindung können durch Mischen der Komponenten A, B, C, D, E, F, G, H und I - soweit sie in den Zusammensetzungen vorliegen - hergestellt werden. Die Mischung kann dabei unter Verwendung von in der Kautschuktechnologie und Kunststofftechnologie bekannten Mischsystemen wie Innenmischern, z. B. Innenmischern mit ineinander greifender oder tangierender Rotorgeometrie, sowie auch in kontinuierlich mischenden Anlagen wie Mischextrudern, z. B. Mischextrudern mit 2 bis 4 und mehr Wellenschnecken, erfolgen.

Bei der Durchführung des erfindungsgemäßen Herstellungsverfahrens ist es wichtig, darauf zu achten, dass die Mischungstemperatur hoch genug ist, dass die Komponenten B und C in den plastischen Zustand überführt werden können, jedoch dabei nicht beschädigt werden. Dies wird gewährleistet, wenn eine Temperatur oberhalb der höchsten Schmelz- oder Erweichungstemperatur der Komponente B und C gewählt wird. Besonders bevorzugt wird das Mischen der Komponenten - soweit sie in den Zusammensetzungen vorliegen - bei einer Temperatur im Bereich von 150°C bis 350°C, bevorzugt 150°C bis 280°C, besonders bevorzugt 170°C bis 240°C vorgenommen.

Grundsätzlich sind verschiedene Varianten zum Mischen der einzelnen Komponenten möglich.

Variante 1: A, B, C ,D ,E ,F ,G ,H und I werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt.

Variante 2: A, B, C, D, G, H und I werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt. Anschließend werden die Komponenten E und F (soweit sie in der erfindungsgemäßen Rezeptur vorliegen) zugegeben und weiter bei Erhalt der erreichten Temperatur gemischt.

Variante 3: A, D, E, F, G, H, und I werden - sofern in der erfindungsgemäßen Zusammensetzung enthalten - gemeinsam vorgelegt und innig bis unterhalb der Reaktionstemperatur von E gemischt. Dann werden die Komponenten B und C (sofern in der erfindungsgemäßen Rezeptur enthalten) zugegeben und auf Erweichungstemperatur von B und C bei anhaltendem Mischen erhitzt. Die Zugabetemperatur von B und C (sofern in der erfindungsgemäßen Rezeptur enthalten) kann oberhalb oder unterhalb der Erweichungstemperatur von B und C (sofern in der erfindungsgemäßen Rezeptur enthalten) erfolgen.

Variante 4: B, C und H werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt. Die Komponenten A, D, E, F, G und I werden (sofern in der erfindungsgemäßen Rezeptur enthalten) zugegeben und die Temperatur oberhalb der höchsten Schmelz- oder Erweichungstemperaturen der Komponenten B und C innig weiter vermischt.

Besonders bevorzugt ist Variante 1 für die Herstellung auf dem Innenmischer. Variante 3 ist besonders bevorzugt für die Herstellung auf kontinuierlichen Mischanlagen.

Durch die vorstehend genannten Verfahrensvarianten, insbesondere durch die Verfahrensvariante 1 und 3 wird erreicht, dass die Komponente A, und die Komponenten B und C nach dem Abschluss der Herstellung eine möglichst feine und gleichmäßige Verteilung erfahren haben. Typisch ist eine Teilchengröße der Elastomerteilchen (sofern in der erfindungsgemäßen Rezeptur enthalten) vor der Vernetzung von < 5 $\mu$m.

Die vorstehend und nachstehend erwähnte Temperatur oberhalb der höchsten Schmelz- oder Erweichungstemperatur der Komponenten B und C ist abhängig von den eingesetzten Komponenten B und C. Bevorzugt ist die Temperatur oberhalb der höchsten Schmelz- oder Erweichungstemperatur der Komponenten B und C 150°C bis 350°C, besonders bevorzugt 170°C bis 240°C.

Die Zugabezeit, Temperatur, Form und Menge der Komponenten E und F sollte darüber hinaus so gewählt sein, dass eine gute Verteilung der Komponenten E und gegebenenfalls F in der Elastomerphase gewährleistet ist, die Elastomer- und Thermoplastphase (B,C) in dem oben beschriebenen Zustand vorliegen und erst dann die Vernetzung der Elastomerphase (falls vernetzt wird, Ausnahmen sind nicht vernetzbare SBC, s.o.) erfolgt, so dass eine Phasenumkehr erfolgt oder eine co-kontinuierliche Phasenstruktur der elastomeren Phase und der thermoplastischen Phase erfolgt (insbesondere bei der Verwendung von Styrolbutadien-Polymeren als Komponente A, bzw. das Elastomer in der thermoplastischen Phase mit Teilchen < 5 $\mu$m dispergiert vorliegt.

Die erfindungsgemäßen Zusammensetzungen eignen sich hervorragend zur Bereitstellung thermoplastischer Elastomere mit ausgewogenen Eigenschaften, insbesondere mit sehr guter Temperatur- und chemischer Beständigkeit bei gleichzeitig sehr guten elastischen Eigenschaften (Druckverformungsrest, Bruchdehnung und Zugfestigkeit) in einem weiten Härtebereich.

Zudem bietet sich durch die Verwendung der Kombination der Komponenten B und C die Möglichkeit kosteneffizient die Härte einer der erfindungsgemäßen Rezepturen einzustellen, da üblicherweise die verwendete Komponente B teurer ist als die erfindungsgemäß verwendete Komponente C. Weiterhin hat sich überraschenderweise herausgestellt, dass sich die Temperaturperformance der erfindungsgemäßen Rezeptur durch die geeignete Wahl der Komponente C zu höheren Temperaturen verschieben lässt, wie durch DSC Messungen (differential scanning calorimetry) bestätigt werden kann.

Gemäß der vorliegenden Erfindung ist es bevorzugt, dass die elastomere Phase (EL) während oder nach dem Vermengen mit der thermoplastischen Phase (T) vernetzt wird, d.h. die Vernetzung dynamisch erfolgt. Die Vernetzung der vorzugsweise dispersen elastomeren Phase (EL) erfolgt vorzugsweise während der Mischung der Komponenten A bis I (soweit diese in der Mischung vorliegen). Die Vernetzung setzt vorzugsweise ein, wenn das Vermengen bei einer Temperatur oberhalb der Schmelz- oder Erweichungstemperatur der Komponenten B und C in Anwesenheit der Komponenten E und gegebenenfalls F über einen Zeitraum von mindestens 15 sec fortgeführt wird.

Nach erfolgter Phasenumkehr bzw. Ausbildung einer cokontinuierlichen Phase wird das erhaltene Produkt, d. h. die thermoplastische Elastomerzusammensetzung, vorzugsweise auf eine Temperatur unterhalb der Schmelz- oder Erweichungstemperatur des oder der Komponenten B und C abgekühlt.

Ein weiterer Gegenstand der vorliegenden Erfindung sind thermoplastische Elastomerzusammensetzungen, die durch die erfindungsgemäßen Verfahren erhältlich sind.

Die erfindungsgemäßen oder erfindungsgemäß hergestellten thermoplastischen Elastomerzusammensetzungen gemäß der vorliegenden Erfindung zeichnen sich dadurch aus, dass die Elastomerkomponente A in fein verteilter Form oder (im Falle von SBC) im fein dispergierten co-continuierlichen Netzwerk in der thermoplastischen Phase (T) vorliegt. Die erhaltenen thermoplastischen Elastomerzusammensetzungen gemäß der vorliegenden Erfindung zeichnen sich durch eine sehr gute Temperatur- und Medienbeständigkeit bei gleichzeitig sehr guten elastischen Eigenschaften (Zugfestigkeit, Bruchdehnung und Druckverformungsrest) in einem breiten Härtebereich aus. Sie verfügen auch bei hohen Temperaturen, die vor allem im Automobilbau gefordert werden, über exzellente physikalische und dynamische Eigenschaften, beispielsweise einen hervorragenden Druckverformungsrest. Erst nach Aufschmelzen der thermoplastischen Phase (T) wird das gesamte System thermoplastisch verarbeitbar und erfüllt damit die notwendigen Voraussetzungen für ein thermoplastisches Elastomer.

Ein weiterer Gegenstand der vorliegenden Erfindung ist somit die Verwendung der erfindungsgemäßen bzw. erfindungsgemäß hergestellten thermoplastischen Elastomerzusammensetzungen zur Herstellung von Formteilen aus einem thermoplastischen Elastomer, beispielsweise Riemen, Dichtungen, Manschetten, Schläuche, Membranen, Dämpfern, Profilen, oder Kabelummantelungen, Schmelzklebstoffen, Folien oder zur Kunststoff-Kautschuk-Coextrusion, oder zum Co-Formteil-Spritzen.

Des Weiteren betrifft die vorliegende Erfindung Formteile, wie Kabelummantelungen, Schmelzklebstoffe oder Folien, die die erfindungsgemäßen thermoplastischen Elastomerzusammensetzungen enthalten.

Die erfindungsgemäßen Formteile zeichnen sich durch hervorragende physikalische Eigenschaften, insbesondere hervorragende Elastizitäten in einem weiten Härtebereich, sowie Hochtemperaturbeständigkeit und Medienbeständigkeit, insbesondere Ölbeständigkeit, aus. Diese Eigenschaften sind insbesondere für Schläuche, Riemen, Membranen, Dichtungen, Bälge, Kabelummantelung, Schmelzklebstoffe, Folien sowie Manschetten beispielsweise für die Automobil- und andere Industrieanwendungen von großer Bedeutung. Die Formteile können z. B. auf einfache Weise in einem Einstufenprozess hergestellt werden.

Die in der vorliegenden Anmeldung verwendeten Begriffe "umfassen", "enthalten" und "aufweisen" sollen auch in jedem Fall, in dem sie verwendet werden, den Begriff "bestehen aus" mitumfassen, so dass diese Ausführungsformen auch in dieser Anmeldung offenbart sind.

Die vorliegende Erfindung soll nun durch die folgenden Ausführungsbeispiele genauer erläutert werden. Die folgenden Ausführungsbeispiele haben nur exemplarischen Charakter und dienen nicht dazu, die vorliegende Erfindung darauf zu beschränken.

Beispiele:

Bestimmungsmethoden und Definitionen:

Die Bestimmung der Shore-Härte erfolgt gemäß DIN EN ISO 868 und DIN ISO 7619-1.

Unter der Zugfestigkeit versteht man die maximale mechanische Zugspannung, die ein Werkstoff aushält, bevor er bricht/reißt. Sie wird im Zugversuch aus der maximal erreichten Zugkraft bezogen auf den ursprünglichen Querschnitt der (genormten) Probe errechnet und in $N/mm^2$ angegeben.

Die Bruchdehnung ist ein Materialkennwert, der die bleibende Verlängerung des Bruches, bezogen auf die Anfangsmesslänge, angibt. Die Bruchdehnung ist bei der Werkstoffprüfung eine von vielen Kenngrößen und charakterisiert die Verformungsfähigkeit eines Werkstoffes. Sie ist die auf die Anfangsmesslänge $L_0$ einer Probe im Zugversuch bezogene bleibende Längenänderung $\Delta L$ nach erfolgtem Bruch. Diese Längenänderung wird in % angegeben.

Der Druckverformungsrest ist ein Maß dafür, wie sich (thermoplastische) Elastomere bei lang andauernder, konstanter Druckverformung und anschließender Entspannung verhalten. Nach DIN ISO 815 wird der Druckverformungsrest (DVR, engl. compression set) bei konstanter Verformung gemessen. Dieser stellt den Verformungsanteil des Testmaterials dar. Viele Testverfahren für Elastomere, wie z. B. die Zugfestigkeit charakterisieren die Qualität und Beschaffenheit des Materials. Der DVR hingegen ist ein wichtiger Faktor, der vor Einsatz eines Materials für einen bestimmten Einsatzzweck beachtet werden muss. Besonders für den Einsatz von Dichtungen und Unterlegplatten aus Elastomeren ist die bleibende Verformung, der Druckverformungsrest (DVR) eine wichtige Kenngröße. Zur Bestimmung dieser Größe wird ein zylindrischer Prüfkörper um z. B. 25 % zusammengedrückt und bei bestimmter Temperatur eine gewisse Zeit so gelagert. Die Temperatur und das Medium (meist Luft, aber auch Öle und andere Gebrauchsflüssigkeiten) für den Druckverformungstest hängt von dem zu testenden Material, seinem geplanten Einsatzzweck und dem Versuchsaufbau ab (z. B. 24 h bei 150 °C). 30 Minuten nach der Entlastung wird bei Raumtemperatur wieder die Höhe gemessen und daraus die bleibende Verformung ermittelt. Ein Druckverformungsrest von 0 % bedeutet, dass der Körper seine ursprüngliche Dicke wieder voll erreicht hat, ein DVR von 100 % sagt, dass der Körper während des Versuchs völlig verformt wurde und keine Rückstellung zeigt. Die Berechnung erfolgt nach folgender Formel: DVR

$$(\%) = ( L_0 - L_2 ) / ( L_0 - L_1 ) \times 100 \%,$$

wobei:

DVR = Druckverformungsrest in %
$L_0$ = Höhe des Probekörpers vor der Prüfung
$L_1$ = Höhe des Probekörpers während der Prüfung (Distanzstück)
$L_2$ = Höhe des Probekörpers nach der Prüfung.

Ausführungsbeispiele:

Tabelle 1 gibt die verwendeten Abkürzungen für die in den Beispielen eingesetzten Komponenten an:

Tabelle 1:

| Komponente | Rohstoff |
|---|---|
| A | Elastomer (Kautschuk) |
| B | Thermoplastisches Elastomer |
| C | Thermoplast |
| D | Weichmacher |
| E | Vernetzungsmittel (bspw. Peroxid (Batch) oder Phenolharz) |
| F | Covernetzer |
| G | Stabilisator, Hilfsstoff und Farbstoff |
| H | Füllstoff |
| I | Verträglichkeitsvermittler |

Beispiel 1: Herstellung einer Referenzzusammensetzung eines thermoplastischen Elastomers:

Es wird gemäß der oben genannten Herstellungsvariante 3 eine thermoplastische Elastomerzusammensetzung mit den aus Tabellen 2 und 3 ersichtlichen Bestandteilen hergestellt. Für das Vermengen der eingesetzten Komponenten wird ein Doppelschneckenextruder verwendet.

Beispiel 2: Herstellung einer weiteren nichterfindungsgemäßen Vergleichszusammensetzung eines thermoplastischen Elastomers:

Diese Zusammensetzung wird auf die gleiche Weise wie in Beispiel 1 hergestellt, mit dem Unterschied dass nicht TPC1 als Komponente B, sondern TPC2 eingesetzt wird.

Beispiel 3: Herstellung einer erfindungsgemäßen Zusammensetzung eines thermoplastischen Elastomers:

Die Zusammensetzung in Beispiel 3 wird auf die gleiche Weise wie in Beispiel 1 hergestellt, mit dem Unterschied, dass TPC1 als Komponente B in einer in Tabelle 2 angegebenen geringeren Menge und zusätzlich Polybutylenterephthalat als Komponente C in der in Tabelle 2 angegebenen Menge eingesetzt wurde.

Beispiel 4: Herstellung einer weiteren nichterfindungsgemäßen Vergleichszusammensetzung eines thermoplastischen Elastomers:

Die Zusammensetzung in Beispiel 4 wurde auf die gleiche Weise wie in Beispiel 1 hergestellt, mit dem Unterschied, dass nicht TPC1, sondern TPC3 als Komponente B eingesetzt, und der Weichmacher weggelassen wurde.

Beispiel 5: Herstellung einer erfindungsgemäßen Zusammensetzung eines thermoplastischen Elastomers:

Die Zusammensetzung in Beispiel 5 wurde auf die gleiche Weise wie in Beispiel 1 hergestellt, mit dem Unterschied, dass TPC1 als Komponente B in einer in Tabelle 2 angegebenen geringeren Menge und zusätzlich Polybutylenterephthalat als Komponente C in der in Tabelle 2 angegebenen Menge eingesetzt wurde.

Beobachtungen:

Wie aus dem Vergleich der Zusammensetzungen aus den erfindungsgemäßen Beispielen 3 und 5 im Vergleich zu der Vergleichszusammensetzung aus Beispiel 1 in Tabelle 4 hervorgeht, ändert sich bei Substitution der Komponente B (TPE) durch die Komponente C (TP) weder die Zugfestigkeit, noch die Bruchdehnung, noch der Druckverformungsrest in wesentlichem Maße. Dennoch kann die Härte von 60 ShA (Beispiel 1) auf 70 ShA (Beispiel 3) und 80 ShA (Beispiel 5) gesteigert werden.

Wie durch Vergleich der Zusammensetzungen nach Beispiel 1 und 2 hervorgeht, kann zwar auch durch die Substitution der Komponente B durch eine andere Komponente B die Härte in gewissem Maße erhöht werden, jedoch geht dies auf Kosten des maximalen Durchsatzes bei der Herstellung (siehe Tabelle 5) und des Rohstoffeinsatzes (siehe Tabelle 7). Gleiches gilt auch, wenn ein Weichmacher weggelassen wird (siehe Zusammensetzung Beispiel 4).

Auch die maximal mögliche Standzeit in der Spritzgussmaschine ist bei den erfindungsgemäßen Zusammensetzungen genauso gut wie bei der Basiszusammensetzung in Beispiel 1, und wesentlich besser als bei den Zusammensetzungen der Beispiele 2 und 4.

Beispiel 6: Herstellung einer nicht-erfindungsgemäßen Vergleichszusammensetzung eines thermoplastischen Elastomers:

Es wird gemäß der oben genannten Herstellungsvariante 3 eine thermoplastische Elastomerzusammensetzung mit den aus Tabellen 8 und 10 ersichtlichen Bestandteilen hergestellt. Für das Vermengen der eingesetzten Komponenten wird ein Doppelschneckenextruder verwendet.

Beispiel 7: Herstellung einer weiteren nicht-erfindungsgemäßen Vergleichszusammensetzung eines thermoplastischen Elastomers:

Diese Zusammensetzung wird auf die gleiche Weise wie in Beispiel 6 hergestellt, mit den in Tabelle 8 angegebenen Unterschieden in der Zusammensetzung.

Beispiel 8: Herstellung einer erfindungsgemäßen Zusammensetzung eines thermoplastischen Elastomers:

Die Zusammensetzung in Beispiel 8 wird auf die gleiche Weise wie in Beispiel 6 hergestellt, mit dem Unterschied, dass nicht nur das TPA als Komponente B in einer in Tabelle 8 angegebenen Menge, sondern zusätzlich auch AQUAMID® 6AF als Komponente C in der in Tabelle 8 angegebenen Menge eingesetzt wurde.

Beispiel 9: Herstellung einer weiteren erfindungsgemäßen Zusammensetzung eines thermoplastischen Elastomers:

Die Zusammensetzung in Beispiel 9 wird auf die gleiche Weise wie in Beispiel 6 hergestellt, mit dem wesentlichen Unterschied, dass nicht nur das TPA als Komponente B in einer in Tabelle 8 angegebenen Menge, sondern zusätzlich auch AQUAMID® 6AF als Komponente C in der in Tabelle 8 angegebenen Menge eingesetzt wurde.

Beispiel 10: Herstellung einer erfindungsgemäßen Zusammensetzung eines thermoplastischen Elastomers:

Die Zusammensetzung in Beispiel 10 wird auf die gleiche Weise wie in Beispiel 6 hergestellt, mit dem wesentlichen Unterschied, dass nicht nur das TPA als Komponente B in einer in Tabelle 8 angegebenen Menge, sondern zusätzlich auch AQUAMID® 6AF als Komponente C in der in Tabelle 8 angegebenen Menge eingesetzt wurde.

Beispiel 11: Herstellung einer weiteren nicht-erfindungsgemäßen Vergleichszusammensetzung eines thermoplastischen Elastomers:

Diese Zusammensetzung wird auf die gleiche Weise wie in Beispiel 6 hergestellt, mit den in Tabelle 9 angegebenen Unterschieden in der Zusammensetzung.

Beispiel 12: Herstellung einer weiteren nicht-erfindungsgemäßen Vergleichszusammensetzung eines thermoplastischen Elastomers:

Diese Zusammensetzung wird auf die gleiche Weise wie in Beispiel 6 hergestellt, mit den in Tabelle 8 angegebenen Unterschieden in der Zusammensetzung.

Beobachtungen:

Wie aus dem Vergleich der Zusammensetzungen aus den erfindungsgemäßen Beispielen 8 bis 10 im Vergleich zu den Vergleichszusammensetzungen aus den Beispielen 6 und 7 in Tabelle 10 hervorgeht, ändert sich durch die Zugabe der Komponente C (TPA) weder die Zugfestigkeit, noch die Bruchdehnung, noch der Druckverformungsrest in wesentlichem Maße. Dennoch kann die Härte in einem gewissen Maße variiert werden. Weiterhin kann an den nicht-erfindungsgemäßen Beispielen 11 und 12 (Tabelle 9) gesehen werden, dass mit dem "härteren" TPA Pebax® 7033 auch die Härte der resultierenden Zusammensetzung erhöht werden kann (Tabelle 12). Allerdings sind hier die Bruchdehnung und der Druckverformungsrest wesentlich schlechter. Somit kann durch die Zugabe eines Polyamids in der Zusammensetzung nicht nur die Härte erhöht werden, sondern es bleiben auch die guten mechanischen Eigenschaften des Materials erhalten. Tabelle 13 zeigt die Veränderung der Zugfestigkeit und der Bruchdehnung der Zusammensetzungen nach Behandlung in Diesel bei 60°C für 21 Tage.

Tabelle 2:

| Zusammensetzungen | | | | | | |
|---|---|---|---|---|---|---|
| | | **Beispiel 1** | **Beispiel 2** | **Beispiel 3** | **Beispiel 4** | **Beispiel 5** |
| Rohstoff | Komponente | phr | phr | phr | phr | phr |
| EVM | A | 90 | 90 | 90 | 90 | 90 |
| TPC1 | B | **58** | | **34** | | 15 |
| TPC2 | | | **60** | | | |
| TPC3 | | | | | 51 | |
| PBT | C | - | - | **24** | - | **43** |
| Weichmacher | D | 30 | 30 | 30 | | 30 |
| Peroxid (Batch) | E | 15 | 15 | 15 | 13 | 15 |
| Covernetzer | F | 4 | 4 | 4 | 3 | 4 |
| Stabilisation, Hilfsstoffe und Farbe: Farbe Additiv 1 Additiv 2 | G | 7 3 3 | 7 3 3 | 7 3 3 | 7 3 3 | 7 3 3 |
| Füllstoffe | H | 4 | 4 | 4 | | 4 |
| Verträglichkeitsvermittler | I | 10 | 10 | 10 | 10 | 10 |

Tabelle 3:

| Eingesetzte Rohstoffe | | | |
|---|---|---|---|
| | | | |
| **Rohstoff** | **Komponente** | **Hersteller** | **Typ** |
| EVM | A | Lanxess | Levapren® 600 |
| TPC1 | B | P-Group (So.F.Ter) | Pibiflex® 4560 |
| TPC2 | | P-Group (So.F.Ter) | Pibiflex® 56X01 |
| TPC3 | | P-Group (So.F.Ter) | Pibiflex® 5880 |
| PBT | C | DSM | ARNITE® T 04 200 |
| Weichmacher | D | Safic Alkan | Edenol® T810T |
| Peroxid (Batch) | E | Pergan | Peroxan® HXY -10PS |
| Covernetzer | F | Kettlitz | Actigran® 70 |
| Stabilisation, Hilfsstoffe und Farbe: Farbe Additiv 1 Additiv 2 | G | Evonik Degussa Rhein Chemie Lanxess | Colcolor® EVA 40/60 RHENOGRAN® PCD-50EVA VULKANOX® HS LG |
| Füllstoffe | H | Bayer | ZnO Aktiv |
| Verträglichkeitsvermittler | I | Kometra | EVM® 600 1% MSA gegraftet |

Tabelle 4:

| Mechanische Werte | | Beispiel 1 | Beispiel 2 | Beispiel 3 | Beispiel 4 | Beispiel 5 |
|---|---|---|---|---|---|---|
| Wert | Einheit | | | | | |
| Härte | ShA | 60 | 74 | 70 | 80 | 80 |
| Zugfestigkeit | N/mm2 | 5,5 | 6,7 | 6,9 | 6,5 | 8,6 |
| Bruchdehnung | % | 273 | 290 | 270 | 270 | 250 |
| Druckverformungsrest bei 24h/150°C | % | 65 | 68 | 65 | 67 | 65 |
| Druckverformungsrest bei 24h/120°C | % | 57 | 59 | 54 | 57 | 55 |

Tabelle 5:

| Herstellung auf Doppelschneckenextruder | | Beispiel 1 | Beispiel 2 | Beispiel 3 | Beispiel 4 | Beispiel 5 |
|---|---|---|---|---|---|---|
| | | | | | | |
| Maximaler Durchsatz | Bezogen auf Basis [%] | 100 | 90 | 100 | 80 | 100 |

Tabelle 6:

| Verarbeitung | | Beispiel 1 | Beispiel 2 | Beispiel 3 | Beispiel 4 | Beispiel 5 |
|---|---|---|---|---|---|---|
| Max. Standzeit bei 240°C in der Spritzgussmaschine | min | 10 | 2 | 10 | 2 | 10 |

Tabelle 7:

| Rohstoffeinsatz | | Beispiel 1 | Beispiel 2 | Beispiel 3 | Beispiel 4 | Beispiel 5 |
|---|---|---|---|---|---|---|
| Rohstoffeinsatz | Bezogen auf Basis [%] | 100 | 108 | 98 | 102 | 96 |

Tabelle 8:

| Zusammensetzungen | | Beispiel 6 | Beispiel 7 | Beispiel 8 | Beispiel 9 | Beispiel 10 |
|---|---|---|---|---|---|---|
| Rohstoff | Komponente | phr | phr | phr | phr | phr |
| EVM | A | 100 | 100 | 100 | 100 | 100 |
| TPA1 ("weiches" TPA) | B1 | 70 | 45 | 50 | 40 | 30 |
| Polyamid | C | - | - | 10 | 20 | 30 |
| Weichmacher | D | 30 | 25 | 30 | 30 | 30 |
| Peroxid (Batch) | E | 13,5 | 13,5 | 13,5 | 13,5 | 13,5 |
| Covernetzer | F | 4 | 4 | 4 | 4 | 4 |
| Stabilisation, Hilfsstoffe und Farbe: | G | | | | | |

(fortgesetzt)

| Zusammensetzungen | | | | | | |
|---|---|---|---|---|---|---|
| | | Beispiel 6 | Beispiel 7 | Beispiel 8 | Beispiel 9 | Beispiel 10 |
| Rohstoff | Komponente | phr | phr | phr | phr | phr |
| Additiv 1 | | 3 | 3 | 3 | 3 | 3 |
| Additiv 2 | | 3 | 3 | 3 | 3 | 3 |
| Füllstoffe | H | 4 | 4 | 4 | 4 | 4 |

Tabelle 9:

| | | Beispiel 11 | Beispiel 12 |
|---|---|---|---|
| Rohstoff | Komponente | phr | phr |
| EVM | A | 100 | 100 |
| TPA2 ("hartes" TPA) | B2 | 70 | 45 |
| Polyamid | C | - | - |
| Weichmacher | D | 30 | 25 |
| Peroxid (Batch) | E | 13,5 | 13,5 |
| Covernetzer | F | 4 | 4 |
| Stabilisation, Hilfsstoffe und Farbe: Additiv 1 Additiv 2 | G | 3 3 | 3 3 |
| Füllstoffe | H | 4 | 4 |

Tabelle 10:

| Eingesetzte Rohstoffe | | | |
|---|---|---|---|
| | | | |
| Rohstoff | Komponente | Hersteller | Typ |
| EVM | A | Lanxess | EVM® 600 |
| TPA1 | B1 | ARKEMA | Pebax® 4033 |
| TPA2 | B2 | ARKEMA | Pebax® 7033 |
| PA6 (Polyamid) | C | Aquafil (Engineering plastics) | AQUAMID® 6AF |
| Weichmacher | D | Safic Alkan | Edenol® T810T |
| Peroxid (Batch) | E | Pergan | Peroxan® HXY -10PS |
| Covernetzer | F | Kettlitz | TRIM (ACTIGRAN® 70) |
| Stabilisation, Hilfsstoffe und Farbe: Additiv 1 Additiv 2 | G | Rhein Chemie Lanxess | RHENOGRAN® PCD-50EVA VULKANOX® HS LG |
| Füllstoffe | H | Bayer | ZnO Aktiv |

Tabelle 11:

| Mechanische Werte | | | | | | |
|---|---|---|---|---|---|---|
| | | **Beispiel 6** | **Beispiel 7** | **Beispiel 8** | **Beispiel 9** | **Beispiel 10** |
| **Wert** | **Einheit** | | | | | |
| Härte | ShA | 57 | 51 | 55 | 61 | 71 |
| Zugfestigkeit | N/mm$^2$ | 3, 8 | 5, 2 | 4, 9 | 4,7 | 5, 0 |
| Bruchdehnung | % | 211 | 273 | 272 | 207 | 191 |
| Druckverformungsrest bei 24h/120°C | % | 81,1 | 63, 0 | 68, 0 | 63, 5 | 70,5 |

Tabelle 12:

| | | **Beispiel 11** | **Beispiel 12** |
|---|---|---|---|
| **Wert** | **Einheit** | | |
| Härte | ShA | 68 | 79 |
| Zugfestigkeit | N/mm$^2$ | 4,5 | 6,5 |
| Bruchdehnung | % | 151 | 156 |
| Druckverformungsrest bei 24h/120°C | % | 72,0 | 80,5 |

Tabelle 13:

| gemessene Größe | Zeitraum der Behandlung | Medium | Temperatur | Beispiel | | | | |
|---|---|---|---|---|---|---|---|---|
| | | | | **7** | **8** | **9** | **10** | **12** |
| Zugfestigkeit (N/mm$^2$) | Startwert | Shell Diesel | 60°C | 5,2 | 4,9 | 4,7 | 5,0 | 6,5 |
| | 3 Wochen | | | 2,0 | 2,2 | 2,3 | 3,3 | 3,5 |
| Bruchdehnung (%) | Startwert | | | 273 | 272 | 207 | 191 | 156 |
| | 3 Wochen | | | 133 | 155 | 119 | 116 | 81 |

## Patentansprüche

1. Thermoplastische Elastomerzusammensetzung, die eine thermoplastische Phase (T) und eine elastomere Phase (EL) aufweist,
wobei EL mindestens ein vernetztes oder unvernetztes Elastomer und T mindestens einen Thermoplasten (TP) und mindestens ein thermoplastisches Elastomer (TPE) umfasst,
wobei TP ein Polyester, Polyamid oder Polyurethan und TPE ein TPE auf Copolyester-Basis (TPC), Polyamid-Basis (TPA)oder Polyurethan-Basis (TPU) ist, und
wobei das Gewichtsverhältnis EL:T im Bereich von 100:25 bis 100:80 liegt.

2. Thermoplastische Elastomerzusammensetzung nach Anspruch 1, worin das Gewichtsverhältnis EL:T im Bereich von 100:35 bis 100:70 liegt.

3. Thermoplastische Elastomerzusammensetzung nach Anspruch 1 oder 2, worin T eine Kombination von Polyester mit TPC oder eine Kombination von Polyamid mit TPA oder TPU umfasst.

4. Thermoplastische Elastomerzusammensetzung nach einem der Ansprüche 1 bis 3, worin die Zusammensetzung zusätzlich ein Vernetzungsmittel aufweist.

5. Thermoplastische Elastomerzusammensetzung nach einem der Ansprüche 1 bis 3, worin das mindestens eine Elastomer der elastomeren Phase eine vernetztes Elastomer ist.

**6.** Thermoplastische Elastomerzusammensetzung nach einem der Ansprüche 1 bis 5, worin das TPC eine Shore-D-Härte im Bereich von 36 ShD bis 60 ShD und das TPA oder TPU eine Shore-A-Härte im Bereich von 60 bis 90 ShA aufweist.

**7.** Verfahren zum Verändern der Shore-Härte von thermoplastischen Elastomerzusammensetzungen ohne wesentliche Verschlechterung des Druckverformungsrests oder der Bruchdehnung oder der Zugfestigkeit, wobei die thermoplastischen Elastomerzusammensetzungen eine thermoplastische Phase (T) und eine elastomere Phase (EL) aufweisen, wobei T einen Thermoplasten (TP) und ein thermoplastisches Elastomer (TPE) aufweist, wobei bei der Herstellung der thermoplastischen Elastomerzusammensetzungen im Vergleich zu einer Referenzusammensetzung mit vorgegebener Shore-Härte das Gewichtsverhältnis EL:T gleich gehalten, aber das Gewichtsverhältnis TP:TPE variiert wird, wobei der Druckverformungsrest der thermoplastischen Elastomerzusammensetzungen, gemessen nach 24 Stunden bei 120°C, um nicht mehr als 10%-Punkte höher liegt, oder die Zugfestigkeit oder die Bruchdehnung der thermoplastischen Elastomerzusammensetzungen um nicht mehr als 10%-Punkte niedriger liegt, jeweils im Vergleich zur Referenzzusammensetzung.

**8.** Verfahren nach Anspruch 7, worin der Druckverformungsrest der thermoplastischen Elastomerzusammensetzungen, gemessen für 24 Stunden bei 120°C, um nicht mehr als 5%-Punkte höher liegt, oder die Zugfestigkeit oder die Bruchdehnung der thermoplastischen Elastomerzusammensetzungen um nicht mehr als 5%-Punkte niedriger liegt, jeweils im Vergleich zur Referenzzusammensetzung.

**9.** Verfahren nach Anspruch 7 oder 8, worin das Gewichtsverhältnis EL:T im Bereich von 100:25 bis 100:80 liegt.

**10.** Verfahren zur Herstellung einer thermoplastischen Elastomerzusammensetzung gemäß einem der Ansprüche 1 bis 6, wobei eine elastomere Phase (EL) und eine thermoplastische Phase (T), wobei T mindestens einen Thermoplasten (TP) und mindestens ein thermoplastisches Elastomer (TPE) umfasst, bei einer Temperatur oberhalb des Schmelz- und Erweichungspunktes von TP und TPE vermengt werden, wobei das Gewichtsverhältnis EL:T im Bereich von 100:25 bis 100:80 liegt.

**11.** Verfahren nach Anspruch 10, worin die elastomere Phase (EL) während oder nach dem Vermengen mit der thermoplastischen Phase (T) vernetzt wird.

**12.** Verfahren nach Anspruch 10 oder 11, worin die Temperatur oberhalb des Schmelz- und Erweichungspunkts im Bereich von 150°C bis 350°C liegt.

**13.** Verfahren nach einem der Ansprüche 7 bis 12, worin TP ein Polyester, Polyamid oder Polyurethan ist.

**14.** Verfahren nach einem der Ansprüche 7 bis 13, worin TPE ein TPE auf Copolyester-Basis (TPC), Polyamid-Basis (TPA)oder Polyurethan-Basis (TPU) ist.

**15.** Verwendung einer thermoplastischen Elastomerzusammensetzung nach einem der Ansprüche 1 bis 6 zur Herstellung eines Formteils aus einem thermoplastischen Elastomer.

**16.** Formteil, das eine thermoplastische Elastomerzusammensetzung nach einem der Ansprüche 1 bis 6 umfasst.

**Claims**

**1.** Thermoplastic elastomer composition which has a thermoplastic phase (T) and an elastomeric phase (EL), wherein EL comprises at least one crosslinked or uncrosslinked elastomer and T comprises at least one thermoplastic (TP) and at least one thermoplastic elastomer (TPE), wherein TP is a polyester, polyamide or polyurethane and TPE is a TPE based on copolyester (TPC), based on polyamide (TPA) or based on polyurethane (TPU), and wherein the weight ratio of EL:T lies in the range of from 100:25 to 100:80.

**2.** Thermoplastic elastomer composition according to claim 1, wherein the weight ratio of EL:T lies in the range of from 100:35 to 100:70.

3. Thermoplastic elastomer composition according to claim 1 or 2, wherein T comprises a combination of polyester with TPC or a combination of polyamide with TPA or TPU.

4. Thermoplastic elastomer composition according to one of claims 1 to 3, wherein the composition additionally has a crosslinking agent.

5. Thermoplastic elastomer composition according to one of claims 1 to 3, wherein the at least one elastomer of the elastomeric phase is a crosslinked elastomer.

6. Thermoplastic elastomer composition according to one of claims 1 to 5, wherein the TPC has a Shore D hardness in the range of from 36 Sh D to 60 Sh D and the TPA or TPU has a Shore A hardness in the range of from 60 to 90 Sh A.

7. Process for altering the Shore hardness of thermoplastic elastomer compositions without substantially impairing the compression set or the elongation at break or the tensile strength, wherein the thermoplastic elastomer compositions have a thermoplastic phase (T) and an elastomeric phase (EL), wherein T has a thermoplastic (TP) and a thermoplastic elastomer (TPE), wherein during the production of the thermoplastic elastomer compositions, compared with a reference composition with predefined Shore hardness, the weight ratio of EL:T is kept the same, but the weight ratio of TP:TPE is varied, wherein, in each case compared with the reference composition, the compression set of the thermoplastic elastomer compositions, measured after 24 hours at 120°C, lies not more than 10 percentage points higher, or the tensile strength or the elongation at break of the thermoplastic elastomer compositions lies not more than 10 percentage points lower.

8. Process according to claim 7, wherein, in each case compared with the reference composition, the compression set of the thermoplastic elastomer compositions, measured for 24 hours at 120°C, lies not more than 5 percentage points higher, or the tensile strength or the elongation at break of the thermoplastic elastomer compositions lies not more than 5 percentage points lower.

9. Process according to claim 7 or 8, wherein the weight ratio of EL:T lies in the range of from 100:25 to 100:80.

10. Process for producing a thermoplastic elastomer composition according to one of claims 1 to 6, wherein an elastomeric phase (EL) and a thermoplastic phase (T), wherein T comprises at least one thermoplastic (TP) and at least one thermoplastic elastomer (TPE), are blended at a temperature above the melting and softening point of TP and TPE, wherein the weight ratio of EL:T lies in the range of from 100:25 to 100:80.

11. Process according to claim 10, wherein the elastomeric phase (EL) is crosslinked during or after the blending with the thermoplastic phase (T).

12. Process according to claim 10 or 11, wherein the temperature above the melting and softening point lies in the range of from 150°C to 350°C.

13. Process according to one of claims 7 to 12, wherein TP is a polyester, polyamide or polyurethane.

14. Process according to one of claims 7 to 13, wherein TPE is a TPE based on copolyester (TPC), based on polyamide (TPA) or based on polyurethane (TPU).

15. Use of a thermoplastic elastomer composition according to one of claims 1 to 6 to produce a shaped part from a thermoplastic elastomer.

16. Shaped part which comprises a thermoplastic elastomer composition according to one of claims 1 to 6.

**Revendications**

1. Composition élastomère thermoplastique, qui présente une phase thermoplastique (T) et une phase élastomère (EL), dans laquelle EL comprend au moins un élastomère réticulé ou non réticulé et T, au moins une matière thermoplastique (TP) et au moins un élastomère thermoplastique (TPE),
dans laquelle TP est un polyester, polyamide ou polyuréthane et TPE est un TPE à base de copolyester (TPC), à base de polyamide (TPA) ou à base de polyuréthane (TPU), et

dans laquelle le rapport en poids EL:T se situe dans la plage de 100:25 à 100:80.

2. Composition élastomère thermoplastique selon la revendication 1, dans laquelle le rapport en poids EL:T se situe dans la plage de 100:35 à 100:70.

3. Composition élastomère thermoplastique selon la revendication 1 ou 2, dans laquelle T comprend une combinaison de polyester avec TPC ou une combinaison de polyamide avec TPA ou TPU.

4. Composition élastomère thermoplastique selon l'une quelconque des revendications 1 à 3, dans laquelle la composition présente en plus un agent de réticulation.

5. Composition élastomère thermoplastique selon l'une quelconque des revendications 1 à 3, dans laquelle l'au moins un élastomère de la phase élastomère est un élastomère réticulé.

6. Composition élastomère thermoplastique selon l'une quelconque des revendications 1 à 5, dans laquelle le TPC présente une dureté Shore-D située dans la plage de 36 ShD à 60 ShD et le TPA ou TPU, une dureté Shore-A située dans la plage de 60 à 90 ShA.

7. Procédé pour modifier la dureté Shore de compositions élastomères thermoplastiques sans dégradation majeure de la déformation rémanente à la compression ou de l'allongement à la rupture ou de la résistance à la traction, dans lequel les compositions élastomères thermoplastiques présentent une phase thermoplastique (T) et une phase élastomère (EL), dans lequel T présente une matière thermoplastique (TP) et un élastomère thermoplastique (TPE), dans lequel lors de la fabrication des compositions élastomères thermoplastiques, en comparaison avec une composition de référence avec une dureté Shore prédéfinie, le rapport en poids EL:T est maintenu identique, toutefois le rapport en poids TP:TPE est varié, dans lequel la déformation rémanente à la compression des compositions élastomères thermoplastiques, mesurée après 24 heures à 120 °C, n'est pas supérieure à 10 points de pourcentage, ou la résistance à la traction ou l'allongement à la rupture des compositions élastomères thermoplastiques n'est pas inférieur de plus de 10 points de pourcentage, respectivement en comparaison avec la composition de référence.

8. Procédé selon la revendication 7, dans lequel la déformation rémanente à la compression des compositions élastomères thermoplastiques, mesurée pendant 24 heures à 120 °C, n'est pas supérieure à 5 points de pourcentage, ou la résistance à la traction ou l'allongement à la rupture des compositions élastomères thermoplastiques n'est pas inférieur de plus de 5 points de pourcentage, respectivement en comparaison avec la composition de référence.

9. Procédé selon la revendication 7 ou 8, dans lequel le rapport en poids EL:T se situe dans la plage de 100:25 à 100:80.

10. Procédé pour fabriquer une composition élastomère thermoplastique selon l'une quelconque des revendications 1 à 6, dans lequel une phase élastomère (EL) et une phase thermoplastique (T), dans lequel T comprend au moins une matière thermoplastique (TP) et au moins un élastomère thermoplastique (TPE), sont mélangées à une température supérieure au point de fusion et de ramollissement de TP et de TPE, dans lequel le rapport en poids EL:T se situe dans la plage de 100:25 à 100:80.

11. Procédé selon la revendication 10, dans lequel la phase élastomère (EL) est réticulée pendant ou après le mélange avec la phase thermoplastique (T).

12. Procédé selon la revendication 10 ou 11, dans lequel la température est supérieure au point de fusion et de ramollissement dans la plage de 150 °C à 350 °C.

13. Procédé selon l'une quelconque des revendications 7 à 12, dans lequel TP est un polyester, polyamide ou polyuréthane.

14. Procédé selon l'une quelconque des revendications 7 à 13, dans lequel TPE est un TPE à base de copolyester (TPC), à base de polyamide (TPA) ou à base de polyuréthane (TPU).

15. Utilisation d'une composition élastomère thermoplastique selon l'une quelconque des revendications 1 à 6 pour fabriquer une pièce moulée à partir d'un élastomère thermoplastique.

16. Pièce moulée, qui comprend une composition élastomère thermoplastique selon l'une quelconque des revendica-

tions 1 à 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008012516 A1
- DE 69227140 T2
- DE 4425944 A1
- US 8193273 B
- EP 2098566 A1
- EP 2098570 B1
- DE 4123963 A1
- EP 1801162 A1

**In der Beschreibung aufgeführte Nicht-Patentliteratur**

- Thermoplastic Elastomers. Carl Hanser Verlag, 2004
- Thermoplastic Elastomers. Carl Hanser Verlag, 2004, 161 ff
- Thermoplastic Elasomers. Carl Hanser Verlag, 2004